(19) Europäisches Patentamt / European Patent Office / Office européen des brevets

(11) **EP 2 291 270 B1**

(12) **EUROPÄISCHE PATENTSCHRIFT**

(45) Veröffentlichungstag und Bekanntmachung des Hinweises auf die Patenterteilung:
**30.01.2013 Patentblatt 2013/05**

(21) Anmeldenummer: **09765553.4**

(22) Anmeldetag: **09.06.2009**

(51) Int Cl.:
**B29B 7/48** (2006.01)     **B29C 47/40** (2006.01)

(86) Internationale Anmeldenummer:
**PCT/EP2009/004121**

(87) Internationale Veröffentlichungsnummer:
**WO 2009/152973 (23.12.2009 Gazette 2009/52)**

(54) **SCHNECKENELEMENTE MIT REDUZIERTEM KAMMWINKEL**

SCREW ELEMENTS WITH REDUCED SWEEP ANGLE

ÉLÉMENTS DE VIS SANS FIN À ANGLE DE FILET RÉDUIT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.06.2008 DE 102008029305**

(43) Veröffentlichungstag der Anmeldung:
**09.03.2011 Patentblatt 2011/10**

(73) Patentinhaber: **Bayer Intellectual Property GmbH 40789 Monheim (DE)**

(72) Erfinder:
- **BIERDEL, Michael**
  **51373 Leverkusen (DE)**
- **KÖNIG, Thomas**
  **51375 Leverkusen (DE)**
- **LIESENFELDER, Ulrich**
  **51469 Bergisch Gladbach (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**EP-A2- 0 160 124     WO-A2-02/09919**
**US-A- 5 487 602**

- **TODD D B: "IMPROVING INCORPORATION OF FILLERS IN PLASTICS A SPECIAL REPORT" ADVANCES IN POLYMER TECHNOLOGY, WILEY AND SONS, HOBOKEN, NJ, US, Bd. 19, Nr. 1, 21. März 2000 (2000-03-21), Seiten 54-64, XP000954227 ISSN: 0730-6679**
- **RAUWENDAAL C: "THE GEOMETRY OF SELF-CLEANING TWIN-SCREWS EXTRUDERS" ADVANCES IN POLYMER TECHNOLOGY, WILEY AND SONS, HOBOKEN, NJ, US, Bd. 15, Nr. 2, 21. Juni 1996 (1996-06-21), Seiten 127-133, XP000586048 ISSN: 0730-6679**

EP 2 291 270 B1

**Beschreibung**

Die Erfindung betrifft Schneckenelemente für mehrwellige Schneckenmaschinen mit paarweise gleichsinnigen und paarweise exakt abschabenden Schneckenwellen, die Verwendung der Schneckenelemente in mehrwelligen Schneckenmaschinen sowie ein Verfahren zur Erzeugung der Schneckenelemente.

Gleichsinnig drehende Zwei- oder ggf. Mehrwellenmaschinen, deren Rotoren sich gegenseitig exakt abschaben, sind bereits seit langem bekannt (DE 862 668). In der Polymerherstellung und - verarbeitung haben Schneckenmaschinen, die auf dem Prinzip exakt abschabender Profile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile wurden beispielsweise in *Klemens Kohlgrüber. Der gleichläufige* Doppelschneckenextruder, Hanser Verlag München 2007, S.96 ff [1] dargestellt. Dort wird die Konstruktion von ein-, zwei- und dreigängigen Profilen beschrieben.

Dem Fachmann ist bekannt, dass im Bereich der Schneckenkämme besonders viel Energie in der Schmelze dissipiert wird, was lokal zu starken Überhitzungen im Produkt führt. Dies ist beispielsweise in [1] auf den Seiten 160ff dargestellt. Diese lokalen Überhitzungen können zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führen. Vor allem ein großer Kammwinkel ist hierbei schädlich.

Der Energieeintrag erfolgt in einem Doppelschneckenextruder in Form von hochwertiger elektrischer Energie, so dass eine Reduzierung des Energieeintrages aus Kosten- und Umweltgründen anzustreben ist. Weiterhin führt ein hoher Energieeintrag zu hohen Produkttemperaturen, was wiederum zu Nachteilen in der Qualität führen kann. Weiterhin begrenzt ein hoher Energieeintrag bei vielen Prozessen auch den möglichen Durchsatz des Doppelschneckenextruders und damit die Wirtschaftlichkeit.

Der Energieeintrag in einem Doppelschneckenextruder wird durch die Prozessparameter Durchsatz und Drehzahl, durch die Materialeigenschaften des Produktes sowie durch die Geometrie der eingesetzten Schneckenwellen festgelegt. Moderne Doppelschneckenextruder verfügen über ein Baukastensystem, bei dem verschiedene Schneckenelemente auf einer Kernwelle aufgezogen werden können. Hiermit kann der Fachmann den Doppelschneckenextruder an die jeweilige Verfahrensaufgabe anpassen. In der Regel werden heute Schneckenelemente mit zwei- und dreigängigen Profilen verwendet, da eingängige Schneckenprofile aufgrund ihres großen Kammwinkels einen viel zu hohen Energieeintrag haben.

Nach dem Stand der Technik (siehe z.B. [1] Seite 101) liegt die Geometrie der exakt abschabenden Schneckenelemente durch Angabe der unabhängigen Größen Gangzahl $Z$, Achsabstand $A$ und Gehäusedurchmesser (entspricht dem Durchmesser $DE$ der exakt abschabenden Kontur) fest. Die Gangzahl ist hierbei die Zahl der Kreisbögen eines jeden Elementes, die die Außenwand abreinigen. Der Winkel eines solchen Kreisbogens, bezogen auf den Drehmittelpunkt, wird als Kammwinkel $KW0$ bezeichnet. Im Bereich des Kammwinkels ist der Außenradius des Profils gleich dem Gehäuseradius. $KW0$ ist nach dem Stand der Technik keine einstellbare und an die Aufgabenstellung anpassbare Größe, sondern ergibt sich aus Gl. 1 zu

$$KW0 = \frac{\pi}{Z} - 2\arccos\left(\frac{A}{DE}\right) \qquad (\text{Gl. 1})$$

wobei $KW0$ der Kammwinkel des exakt abschabenden Profils im Bogenmaß und $\pi$ die Kreiszahl ($\pi \approx 3{,}14159$) ist. Die Summe der Kammwinkel über beide Elemente eines dicht kämmenden Elementepaars $SKW0$ ergibt sich zwangsläufig zu

$$SKW0 = 2\pi - 4Z\arccos\left(\frac{A}{DE}\right) \qquad (\text{Gl. 2})$$

Dem Fachmann ist bekannt, dass direkt abschabende Schneckenprofile nicht direkt in einen Doppelschneckenextruder eingesetzt werden können, vielmehr sind Spiele zwischen den Schnecken erforderlich. Die Geometriedaten für die ausgeführten Schneckengeometrien verschafft sich der Fachmann auf Grundlage der Kontur exakt abschabender Schnecken mit bekannten Methoden, wie sie z.B. in [1] dargestellt sind. Für Förderelemente sind in [1] auf den Seiten 28 ff verschiedene mögliche Strategien beschrieben. Bei Verwendung der dort angegebenen Längsschnitt- oder Raumäquidistante reduzieren sich die Kammwinkel $KWA0$ der tatsächlich ausgeführten Schnecken, wie z.B. in [1], S. 100 dargestellt ist, gegenüber dem Winkel *KW0*. Insbesondere ein großes Spiel zwischen den Schnecken führt zu Verringerung von *KWA0*. Ein großes Spiel zwischen den Schnecken zur Verringerung des Kammwinkels ist jedoch ungünstig, weil dadurch der Effekt der gegenseitigen Selbstreinigung der Schnecken verringert wird und lange Verweilzeiten an der Oberfläche der Schneckenelemente auftreten, die zu lokaler Produktschädigung und damit zu Verschlechterung der Qualität des Produktes führt. Auch ist dem Fachmann bekannt, dass durch Vergrößerung der Spiele die Wirksamkeit von Schneckenelementen bezüglich Förderwirkung und Druckaufbau negativ beeinflusst wird, so dass zur Erfüllung einer gegebenen verfahrenstechnischen Aufgabe Spiele nicht zu groß gewählt werden dürfen.

Werden Bereiche eines Doppelschneckenextruders mit Schmelze teilgefüllt betrieben, was z.B. zur Entgasung oder als Reserve für eine Druckaufbauzone geschieht, so rotiert die Schmelze vor den Kämmen [1]. Jedes Schneckenprofil hat hierbei eine die Schmelze "schiebende" und eine die Schmelze "ziehende" Flanke. Die Schneckenwelle dreht sich so, dass die "schiebende" Flanke vorauseilt und die ziehende Flanke nachzieht. Im teilgefüllten Zustand rotiert die Schmelze vor der "schiebenden" Flanke. Die Energiedissipation sowie die Effektivität z.B. für Entgasungsaufgaben in dieser rotierenden Schmelze hängt - neben dem Kammwinkel und den Spielen - auch von der Geometrie des Schmelzekanals vor der "schiebenden" Flanke ab. Eine Möglichkeit, diese Geometrie an die Aufgabenstellung anzugleichen, fehlt nach dem Stand der Technik.

Im Betrieb sind die Wellen von mehrwelligen Extrudern üblicherweise an der Antriebsseite, die gleichzeitig die Produktzugabeseite darstellt, im Getriebe gelagert. Zur Seite des Produktausstoßes wird eine Lagerung im schmelzeflüssigen Produkt vorgenommen, da eine externe Lagerung an der Zone des Produktausstoßes hinderlich wäre. Bevor ein Mehrwellenextruder bei einem Anfahrvorgang mit Produkt beschickt wird, laufen die Wellen ohne Schmierung auf ihren Kämmen auf dem Material der Gehäuse. Dies kann zu Abrieb, Beschädigung von Welle und Gehäuse sowie zu Kontamination des Produktes führen. Um einen übermäßigen Verschleiß der Kämme zu vermeiden, ist ein gewisser Mindest-Kammwinkel notwendig. Wünschenswert wäre es daher, diesen Kammwinkel frei wählen zu können.

Doppelschneckenextruder können auch Verschleiß unterworfen sein. Dieser kann bei reinen Polymeren in der Aufschmelzzone auftreten. Produkte, die mit festen Füll- und Verstärkungsstoffen wie z.B. Talkum, Calciumcarbonat oder besonders Glasfasern gefüllt sind, erzeugen besonders starken Verschleiß. Auch Korrosionsangriffe sind möglich, wenn das Produkt z.B. Säuren enthält oder abspaltet. Derartige Abrasions- und Korrosionsangriffe wirken besonders stark auf die Kanten, die den Kamm eines Profils begrenzen, wo es z.B. zu Materialabtrag oder zu Ausbröckeln kommen kann. Solche Veränderungen am Profilkamm beeinflussen die Wirksamkeit des Mehrwellenextruders in entscheidender Weise, was unerwünscht ist. Abgerundete Kanten wären gegen derartige Einflüsse deutlich weniger anfällig, sind nach dem Stand der Technik aber ohne Verlust der Selbstreinigung nicht möglich.

Es stellt sich daher ausgehend vom Stand der Technik die Aufgabe, dicht kämmende Schneckenelemente für mehrwellige Schneckenmaschinen bereitzustellen, die nicht den oben genannten Limitierungen von Schneckenelementen nach dem Stand der Technik unterworfen sind. Es stellt sich die Aufgabe, Schneckenelemente bereitzustellen, bei denen der Energieeintrag verringert ist. Es stellt sich ferner die Aufgabe, Schneckenelemente bereitzustellen, bei denen die Geometrie der schiebenden und ziehenden Flanke in Hinblick auf die jeweilige Aufgabenstellung hin so gestaltet werden kann, dass eine optimale Bearbeitung des Produkts in der mehrwelligen

Schneckenmaschine gegeben ist.

EP-A-O 160 124 offenbart ein Schneckenelement genäß dem oberbegriff des Anspruchs 1.

Überraschend wurden Schneckenelemente mit einem gegenüber dem Stand der Technik reduzierten Kammwinkel gefunden, welche diese Aufgaben lösen. Gegenstand der Erfindung sind daher Schneckenelemente gemäß Anspruch 1 für mehrwellige Schneckenmaschinen mit paarweise gleichsinnigen und paarweise exakt abschabenden Schneckenwellen, mit zwei oder mehr Schneckengängen, dadurch gekennzeichnet, dass die Summe *SKW* aller Kammwinkel $KW_k$ eines Elementepaars frei wählbar, größer als 0 und kleiner als $2\pi - 4Z\arccos\left(\dfrac{A}{DE}\right)$ ist, wobei *Z* die Gangzahl, *A* der Achsabstand zwischen zwei Schneckenelementen und *DE* der Außendurchmesser der Schneckenelemente ist, sowie die aus diesen exakt abschabenden Profilen durch Einstellung von Spielen abgeleiteten Schneckenelemente. Der Index *k* läuft bei der Summierung über alle Kammwinkel von 1 bis 2\**Z*. Bei erfindungsgemäßen Schneckenelementen können die Geometrien auf der schiebenden und der ziehenden Flanke nach Bedarf individuell gestaltet werden und die die Kämme begrenzenden Kanten nach Bedarf abgerundet werden,.

Dabei ist die Erfindung nicht auf Schneckenelemente aus der heutzutage üblichen Modulbauweise einer Schnecke aus Schneckenelementen und Kemwellen beschränkt, sondern auch auf Schnecken in Massivbauweise anwendbar. Daher sind unter dem Begriff Schneckenelemente auch Schnecken in Massivbauweise zu verstehen.

Die Gangzahl Z erfindungsgemäßer Schneckenelemente beträgt bevorzugt 2, 3, 4, 5, 6, 7 oder 8; besonders bevorzugt beträgt sie 2 bis 4.

Der Außenradius eines Schneckenprofils beträgt *RE=DE/2,* der Innendurchmesser *DK* und der Innenradius *RK=DK/2.* Damit gilt stets *A=RE+RK.*

Das Profil der erfindungsgemäßen Schneckenelemente ("Schneckenprofil") setzt sich bevorzugt aus Kreisbögen zusammen, die tangential ineinander übergehen. Diese Schneckenprofile setzten sich aus mindestens 6*Z Kreisbögen zusammen.

Die Größe eines Kreisbogens ist durch die Angabe seines Zentriwinkels und seines Radius gegeben. Im Folgenden wird der Zentriwinkel eines Kreisbogens kurz als der Winkel eines Kreisbogens bezeichnet. Die Position eines Kreisbogens ist durch die Position seines Mittelpunkts und durch die Position seiner beiden Endpunkte gegeben.

Das Profil erfindungsgemäßer Schneckenelemente zeichnet sich dadurch aus, dass ein oder mehrere Kreisbögen einen Radius der Größe Null haben können. In diesem Fall weist das Profil einen oder mehrere Knicke auf.

Ein vorgegebenes Schneckenprofil auf einer ersten Welle eines Doppelschneckenextruders (das "erzeugende") legt das Schneckenprofil auf einer benachbarten zweiten Welle (das "erzeugte") eindeutig fest. Das Schneckenprofil auf einer ersten Welle des Doppelschneckenextruders wird daher als das erzeugende Schneckenprofil bezeichnet, während das Schneckenprofil auf der benachbarten zweiten Welle des Doppelschneckenextruders als das erzeugte Schneckenprofil bezeichnet wird. Bei einem Mehrwellenextruder werden das erzeugende Schneckenprofil und das erzeugte Schneckenprofil auf benachbarten Wellen immer abwechselnd eingesetzt.

Die erfindungsgemäßen Schneckenprofile sind stets geschlossen und konvex. Die Summe der Winkel der einzelnen Kreisbögen für jedes Element ist stets $2\pi$.

Erfindungsgemäße Schneckenelemente zeichnen sich dadurch aus, dass jeweils ein Kreisbogen des erzeugten Schneckenprofils mit einem Kreisbogen des erzeugenden Schneckenprofils "korrespondiert". Unter "korrespondieren" wird verstanden, dass

● die Winkel von korrespondierenden Kreisbögen gleich groß sind,

● die Summe der Radien korrespondierender Kreisbögen gleich dem Achsabstand ist,

● je eine der Verbindungslinien zwischen dem Mittelpunkt eines Kreisbogens des erzeugenden Schneckenprofils und dessen Endpunkten parallel zu je einer der Verbindungslinien zwischen dem Mittelpunkt des korrespondierenden Kreisbogens des erzeugten Schneckenprofils und dessen Endpunkten verläuft,

● die Richtungen, in denen die Endpunkte eines Kreisbogens des erzeugenden Schneckenprofils vom Mittelpunkt des Kreisbogens aus liegen, jeweils entgegengesetzt sind zu den Richtungen, in denen die Endpunkte des korrespondierenden Kreisbogens des erzeugten Schneckenprofils vom Mittelpunkt des Kreisbogens des erzeugten Schneckenprofils aus liegen,

● der Mittelpunkt eines Kreisbogens des erzeugenden Schneckenprofils einen Abstand zum Mittelpunkt eines korrespondierenden Kreisbogens des erzeugten Schneckenprofil hat, der dem Achsabstand entspricht,

● die Verbindungslinie zwischen dem Mittelpunkt eines Kreisbogens des erzeugenden Schneckenprofils und dem Mittelpunkt des korrespondierenden Kreisbogens des erzeugten Schneckenprofile parallel zu der Verbindungslinie zwischen dem Drehpunkt des erzeugenden Schneckenprofils und dem Drehpunkt des erzeugten Schneckenprofils ist,

● die Richtung, in die der Mittelpunkt eines Kreisbogens des erzeugenden Schneckenprofils verschoben werden müsste, um mit dem Mittelpunkt des korrespondierenden Kreisbogens des erzeugten Schneckenprofils zur Deckung gebracht zu werden, die gleiche ist, in die der Drehpunkt des erzeugenden Schneckenprofils verschoben werden muss, um mit dem Drehpunkt des erzeugten Schneckenprofils zur Deckung gebracht zu werden.

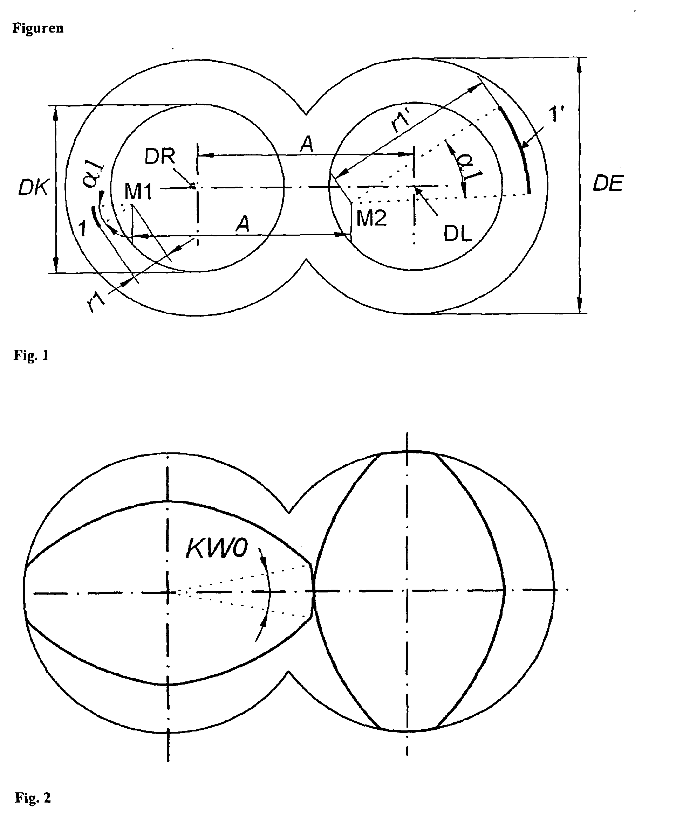

Figur 1 zeigt ein Beispiel von zwei korrespondierenden Kreisbögen. Der Drehmittelpunkt der erzeugenden Schnecke ist *DR* und der Drehmittelpunkt der erzeugten Schnecke *DL*. In dieser Figur ist Kreisbogen 1 der erzeugende und der Kreisbogen 1' der erzeugte.

Ein erzeugendes Schneckenprofil erfindungsgemäßer Schneckenelemente hat Z Kreisbögen, deren Radien gleich *RE* sind und deren Mittelpunkte mit dem Drehmittelpunkt zusammenfallen ("Kammbögen").

Ein erzeugendes Schneckenprofil erfindungsgemäßer Schneckenelemente hat Z Kreisbögen, deren Radien gleich *RK* sind und deren Mittelpunkte mit dem Drehmittelpunkt zusammenfallen ("Nutbögen"). Das korrespondierende erzeugte Schneckenprofil besitzt ebenfalls Z Kammbögen und Z Nutbögen.

Die Summe der Winkel der Kamm- und Nutbögen der erfindungsgemäßen erzeugenden Schneckenprofile ist frei wählbar, größer als 0 und kleiner als $2\pi - 4Z\arccos\left(\dfrac{A}{DE}\right)$.

Die Summe der Winkel aller Kammbögen des erzeugten und des erzeugenden Schneckenprofils ist gleich der Summe der Kamm- und Nutwinkel des erzeugenden Schneckenprofils und ist erfindungsgemäß größer als 0 und kleiner

$$\text{als } 2\pi - 4Z \arccos\left(\frac{A}{DE}\right).$$

In einer bevorzugten Ausführung erfindungsgemäßer Schneckenelemente sind Kammbögen und Nutbögen so angeordnet, dass sie beim Umlauf um das Profil abwechseln auftreten, d.h. es folgt beim Umlauf auf jeden Kammbogen ein Nutbogen und auf jeden Nutbogen ein Kammbogen. Hieraus ergibt sich für das erzeugte Schneckenprofil zwangsweise, dass die Kammbögen und Nutbögen so angeordnet sind, dass sie beim Umlauf um das Profil abwechselnd auftreten, d.h. es folgt beim Umlauf auf jeden Kammbogen ein Nutbogen und auf jeden Nutbogen ein Kammbogen.

In einer bevorzugten Ausführungsform erfindungsgemäßer Schneckenelemente lässt sich für ein erzeugendes Schneckenelement eine Linie "$K_1$" finden, die ausgehend von dem Drehmittelpunkt des Elementes bis zu einem Punkt auf einem Kammbogen geführt wird, so dass (Z-1) weitere Linien existieren, die sich im Drehmittelpunkt des erzeugenden Schneckenelements mit der ersten Linie schneiden und dort in einem Winkel 2*(i-1)*$\pi$/Z zu der ersten Linie stehen und jeweils einen weiteren Kammbogen des erfindungsgemäßen Profils schneiden, wobei i alle Zahlen von 2 bis Z durchläuft. Diese Linien werden im Weiteren als $K_j$ bezeichnet.

Für diese bevorzugte Ausführungsform gilt weiterhin, dass jede Linie, die vom Drehmittelpunkt ausgeht und zu der Linie "$K_1$" in einem Winkel von (2*j-1)*$\pi$/Z steht, einen Nutbogen schneidet, wobei j alle Zahlen von 1 bis Z durchläuft. Diese Linien werden im Weiteren als $N_j$ bezeichnet.

Zwei Linien $K_i$ und $N_j$ werden als "benachbart" bezeichnet, wenn der Winkel zwischen beiden Linien genau $\pi$/Z beträgt. Dies ist der Fall für die Linien $K_1$ und $N_1$, $K_2$ und $N_2$, ... sowie für die Linien $N_1$ und $K_2$, $N_2$ und $K_3$, ... bis zu $N_z$ und $K_i$.

Für die weiteren Ausführungen wird das Schneckenprofil zwischen zwei benachbarten Linien $K_i$ und $N_j$ als "Teilprofil" bezeichnet. Man kann sich ein gesamtes Schneckenprofil aus 2*Z Teilprofilen aufgebaut denken

Zwei Teilprofile werden als "benachbart" bezeichnet, wenn sie durch eine gemeinsame Linie $K_i$ oder $N_j$ voneinander abgegrenzt werden.

Die Anzahl der Kreisbögen in einem erfindungsgemäßen Teilprofil beträgt mindestens vier. Wenn zwei benachbarte Kreisbögen, die direkt an einer der Linien $K_i$ oder $N_j$ ineinander übergehen, die gleichen Mittelpunkte und die gleichen Radien aufweisen, ist es möglich, diese beiden Kreisbögen bei der Zählung der Kreisbögen für das gesamte Profil zu einem einzigen Kreisbogen zusammenzufassen, so dass diese Zahl der Kreisbögen für das gesamte Profil geringer sein kann als die Summe der Zahlen der Kreisbögen für jedes einzelne Teilprofil.

Zwei Teilprofile werden als korrespondierend bezeichnet, wenn alle Teilkreise der beiden Teilprofile miteinander korrespondieren.

In einer bevorzugten Ausführungsform der erfindungsgemäßen Schneckenelemente ist mindestens ein Kreisbogen des erzeugenden Schneckenprofils, der zu einem Kammbogen benachbart ist, ein Kreisbogen mit dem Radius 0 (d.h. eine scharfe Kante) und mindestens ein Kreisbogen des erzeugenden Schneckenprofils, der zu einem Nutbogen benachbart ist, ein Kreisbogen mit einem Radius gleich dem Achsabstand *A*. Dies führt zwangsläufig dazu, dass auf dem erzeugten Schneckenprofil mindestens ein Kreisbogen, der zu einem Kammbogen benachbart ist, ein Kreisbogen mit dem Radius 0 ist und mindestens ein Kreisbogen, der zu einem Nutbogen benachbart ist, den Radius *A* = Achsabstand hat.

In einer weiteren bevorzugten Ausführung der erfindungsgemäßen Schneckenelemente ist mindestens ein Kreisbogen des erzeugenden Schneckenprofils, der zu einem Kammbogen benachbart ist, ein Kreisbogen mit einem Radius > 0 und kleiner als 0,1 mal dem Schneckendurchmesser *DE* und mindestens ein Kreisbogen des erzeugenden Schneckenprofils, der zu einem Nutbogen benachbart ist, ein Kreisbogen mit einem Radius kleiner als der Achsabstand *A* und größer als *A*-0,1*DE.* Dies führt zwangsläufig dazu, dass auf dem erzeugten Schneckenprofil mindestens ein Kreisbogen, der zu einem Kammbogen benachbart ist, ein Kreisbogen mit einem Radius > 0 und kleiner als 0,1 mal dem Schneckendurchmesser *DE* ist und mindestens ein Kreisbogen, der zu einem Nutbogen benachbart ist, einen Radius kleiner als *A* und größer als *A*-0,1*DE* hat.

In einer bevorzugten Ausführungsform ist das Schneckenprofil erfindungsgemäßer Schneckenelemente auf den beiden Schneckenwellen - bis ggf. auf eine Drehung um $\pi$/Z für gerade Z - identisch und punktsymmetrisch zum Drehpunkt des jeweiligen Profils. Dieses Profil ist dadurch gekennzeichnet, dass es aus zwei Arten von Teilprofilen besteht (im Weiteren mit "X" und "Y" bezeichnet). Das Teilprofil X gehört zu dem erzeugenden Schneckenprofil und das Teilprofil Y gehört zu dem erzeugten Schneckenprofil. Durch Drehung des Profils X um den Drehmittelpunkt des erzeugenden Schneckenprofils um 2$\pi$k/Z, wobei *k* alle ganzen Zahlen von 1 bis Z-1 durchläuft, wird das Schneckenprofil in den jeweiligen Teilabschnitten ergänzt. Durch Drehung des Profils Y um den Drehmittelpunkt des erzeugten Schneckenprofils um 2$\pi$k/Z, wobei *k* alle ganzen Zahlen von 1 bis Z-1 durchläuft, wird das Schneckenprofil in den jeweiligen Teilabschnitten ergänzt. Weiterhin wird das erzeugende Schneckenprofil durch Teilprofile Y ergänzt, und zwar dergestalt, dass die Teilprofile Y von dem erzeugten Schneckenprofil durch Verschiebung um den Achsabstand in Richtung von dem Drehmittelpunkt des erzeugten Schneckenprofils zum Drehmittelpunkt des erzeugenden Schneckenprofils und bei geradem Z zusätzlich durch Drehung um $\pi$/Z auf das erzeugende Profil kopiert werden. Weiterhin wird das erzeugte Schneckenprofil durch Teilprofile X ergänzt, und zwar dergestalt, dass die Teilprofile X von dem erzeugenden Schneckenprofil durch Verschiebung um den Achsabstand in Richtung von dem Drehmittelpunkt des erzeugenden Schneckenprofils zum Drehmittelpunkt des erzeugten Schneckenprofils und bei geradem $Z$ zusätzlich durch Drehung um $\pi/Z$ auf das erzeugte Profil kopiert werden. Die Zahl der Kreisbögen eines Teilabschnittes ist größer oder gleich vier, bevorzugt größer oder gleich sechs.

In einer weiteren bevorzugten Ausführungsform erfindungsgemäßer Schneckenelemente ist das Schneckenprofil auf beiden Schneckenwellen - bis ggf. auf eine Drehung um $\pi/Z$ für gerade $Z$ - identisch, punktsymmetrisch zum Drehpunkt des jeweiligen Profils und weiterhin dadurch gekennzeichnet, dass alle Linien $K_i$ und $N_j$ Symmetrielinien des Profils darstellen. In diesem Fall ist das Profil eindeutig durch das Teilprofil zwischen den Linien $K_1$ und $N_1$ bestimmt und wird, ausgehend von diesem Teilprofil, jeweils für ein benachbartes Teilprofil durch Spiegelung an der Symmetrielinie zwischen den beiden Teilprofilen erhalten. Für die Beschreibung der sowohl punkt- als auch spiegelsymmetrischen Schneckenprofile wird die Linie FP eingeführt. FP hat einen minimalen Abstand vom Drehmittelpunkt, der A/2 beträgt, schneidet die Linien $K_1$ und $N_1$ und steht senkrecht auf der Winkelhalbierenden zwischen $N_1$ und $K_1$.

Das Teilprofil zwischen den Linien $K_1$ und $N_1$ dieser bevorzugten Ausführungsform erfindungsgemäßer Schneckenelemente zeichnet sich dadurch aus, dass die Kreisbögen des Teilprofils in einem Punkt, der auf FP liegt, tangential ineinander übergehen. Dadurch ist FP eine Tangente an diese Kreisbögen. Durch den Punkt, an dem die Kreisbögen FP tangieren, wird das Teilprofil X in zwei weitere Teilprofile unterteilt, X1 und X2. Das Teilprofil X1 umfasst diejenigen Kreisbögen, ausgehend von $K_1$ bis zum Berührpunkt an FP und das Teilprofil X2 diejenigen Kreisbögen, ausgehend vom Berührpunkt an FP bis zu $N_1$. Das Teilprofil Y1 auf der erzeugten Schnecke sei dasjenige, was zu den Kreisbögen von X1 korrespondiert. Durch Spiegelung an einer Gerade, die senkrecht in der Mitte zwischen den Drehpunkten der beiden Schneckenprofile steht, und durch anschließende Drehung um den Drehmittelpunkt des erzeugten Profils um $\pi/Z$, wird das Teilprofil Y1 auf das Teilprofil X2 überführt. Das damit komplettierte Teilprofil X kann durch fortlaufende Spiegelung an den Linien $N_1$, $K_2$, $N_2$, ... das vollständige erzeugende Schneckenprofil erzeugen. Das Schneckenprofil auf der erzeugten Schnecke wird durch Verschiebung des Schneckenprofils auf der erzeugenden Schnecke und, falls $Z$ gerade ist, durch Drehung um den Drehmittelpunkt des erzeugten Profils um $\pi/Z$ erhalten.

Für die Schneckenprofile erfindungsgemäßer Schneckenelemente können Spiele im Bereich von 0,1 bis 0,001 bezogen auf den Durchmesser des Schneckenprofils, verwendet werden, bevorzugt 0,002 bis 0,05 und besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Das Spiel zwischen Schnecke und Gehäuse wird als $\delta$ bezeichnet, das Spiel zwischen Schnecke und Schnecke als s. Die Spiele können auch konstant oder, in den angegebenen Grenzen, variabel sein. Es ist auch möglich, innerhalb der Spiele ein Schneckenprofil zu verschieben. Dem Fachmann sind Methoden bekannt, um ausgehend von einem vorgegebenen, exakt abschabenden Schneckenprofil, eine Schneckenprofil mit Spielen abzuleiten. Bekannte Methoden hierfür sind beispielsweise die in [1] auf den Seiten 28 ff beschriebene Möglichkeit der Achsabstand-Vergrößerung, der Längsschnitt-Äquidistanten und der Raumäquidistanten. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elementes) um das halbe Spiel Schnecke-Schnecke senkrecht zur Profilkurve nach innen, in Richtung zur Drehachse hin, verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt wird die Längsschnitt-Äquidistante und die Raumäquidistante, besonders bevorzugt die Raumäquidistante verwendet.

Das Verhältnis $RE/A$ vom Außenradius $RE$ des Schneckenelements zum Achsabstand $A$ beträgt für zweigängige erfindungsgemäße Schnecken bevorzugt zwischen 0,54 und 0,7 und besonders bevorzugt zwischen 0,58 und 0,63, für dreigängige Schnecken bevorzugt zwischen 0,53 und 0,57 und besonders bevorzugt zwischen 0,54 und 0,56, sowie für viergängige Schnecken bevorzugt zwischen 0,515 und 0,535.

Die erfindungsgemäßen Schneckenelemente können als Förderelemente oder Knetelemente oder Mischelemente ausgebildet sein.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Schneckendurchmessers.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder fördemeutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Schneckendurchmessers.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind. Bevorzugt sind mehrere Durchbrüche vorhanden, die in konstantem Winkel zueinander angeordnet sind.

Gegenstand der vorliegenden Erfindung ist weiterhin die Verwendung der erfindungsgemäßen Schneckenelemente in mehrwelligen Schneckenmaschinen. Bevorzugt werden die erfindungsgemäßen Schneckenelemente in zweiwelligen Schneckenmaschinen eingesetzt. Die Schneckenelemente können in den mehrwelligen Schneckenmaschinen in Form von Knet-, Misch- oder Förderelementen vorliegen. Es ist ebenso möglich, Knet-, Förder-, und Mischelemente in einer Scheckenmaschine miteinander zu kombinieren. Die erfindungsgemäßen Schneckenelemente können auch mit anderen Schneckenelementen, die z.B. nach dem Stand der Technik bekannt sind, kombiniert werden.

Gegenstand der vorliegenden Erfindung ist weiterhin ein Verfahren zur Erzeugung erfindungsgemäßer Schneckenelemente. Das erfindungsgemäße Verfahren ermöglicht die geometrische Konstruktion von korrespondierenden Teilprofilen nur mit Zirkel und Winkellineal, so dass es leicht nachzuvollziehen ist. Vorteilhaft wird es als Computerprogramm implementiert. Zunächst werden die definierenden Größen $Z$, $DE$ und $A$ der zu konstruierenden Schneckenelemente festgelegt. Dann werden die Drehpunke des erzeugenden und des erzeugten Teilprofils mit dem Abstand $A$ eingezeichnet. Die Linie $K_1$, die auf einen Punkt des Kammbogens führt, wird zweckmäßigerweise so gewählt, dass sie von dem Drehpunkt des erzeugenden Profils ausgeht und in Richtung des Drehpunkts des erzeugten Profils führt.

Die Linie $N_1$ wird im Drehpunkt des erzeugenden Teilprofils in einem Winkel von $\pi/Z$ zu der Linie $K_1$ gezeichnet. Die Größen $RE=DE/2$ und $RK=A-RE$ werden berechnet. Dann wird die Zahl der Kreisbögen des Teilprofils n festgelegt. Die Zahl der Kreisbögen n ist bevorzugt 6, kann aber auch kleiner oder größer sein.

Als nächstes wird der Kammwinkel $\alpha$ gewählt und ein Kreisbogen mit einem Winkel zwischen 0 und $\alpha$, bevorzugt $\alpha/2$, und einem Radius RE mit dem Mittelpunkt der erzeugenden Schnecke als Kreismittelpunkt geschlagen, wobei ein Ende des Bogens auf der Linie $K_1$ liegt und der Bogen in Richtung $N_1$ geschlagen wird. Für den Nutwinkel wählt man den Winkel $\beta$, der gleich $\alpha$ sein kann, aber nicht zwingend sein muss. Dafür schlägt man einen Bogen $\beta/2$ von der Linie $N_1$ in Richtung $K_1$, der den Nutbogen darstellt.

Als nächstes zeichnet man den tangierenden Kreisbogen 2, der an den Kammbogen anschließt. Für diesen Kreisbogen kann man Winkel und Radius auswählen, wobei der Radius des Kreisbogens kleiner oder gleich dem Achsabstand sein muss. Bei der Wahl kann es geschehen, dass in nachfolgenden Schritten das Schließen des Teilprofils nicht mehr gelingt, weil die Bedingungen "geschlossenes Profil" oder "konvexes Profil" verletzt werden. Ist dies der Fall, so muss man den Winkel oder den Radius verkleinern und einen neuen Versuch starten. Der Kreisbogen kann auch den Radius 0 haben.

Zur Konstruktion eines tangierenden Kreisbogens fällt man stets ein Lot auf vom Endpunkt eines bereits vorhandenen Kreisbogens in Richtung des Mittelpunktes dieses vorhandenen Kreisbogens des erzeugenden Schneckenprofils. Dieses Lot wird als "Begrenzung" zweier Kreisbögen bezeichnet. Jeder Begrenzung wird eine Richtung zugeordnet, die ausgehend von dem Mittelpunkt des Kreisbogens und zu dem Endpunkt des jeweiligen Kreisbogens führt. Auf der Begrenzung liegen stets die Mittelpunkte beider tangierender Kreisbögen. Den Mittelpunkt des gesuchten Kreisbogens erhält man, indem man einen Kreis um den Endpunkt des vorhandenen Kreisbogens mit dem Radius des gesuchten Kreisbogens schlägt. Der Schnittpunkt dieses Kreises mit der Begrenzung ist der gesuchte Mittelpunkt.

Ein Kreisbogen, dessen Radius gleich 0 ist, wird wie ein Kreisbogen mit einem sehr kleinen Radius eps behandelt, wobei eps gegen 0 strebt, so dass sich der tangentiale Übergang weiterhin konstruieren lässt. Alternativ kann ein Kreisbogen, dessen Radius gleich 0 ist, so behandelt werden, dass das Schneckenprofil an der Position dieses Kreisbogens einen Knick aufweist, wobei die Größe des Knicks durch den Winkel dieses Kreisbogens gegeben ist.

Danach kann man noch einen oder mehrere tangierende Kreisbögen 3, 4, ... bis n-4 anschließen. Für die Kreisbögen n-3, n-2 und n-1 werden die Radien $r$(n-3), $r$(n-2) und $r$(n-1) festgelegt. Der Radius des Kreisbogens n-1 wird gleich $A$ gewählt, wenn das erzeugte Schneckenprofil eine scharfe Kante am Kamm haben soll.

Das Profil wird dann auf folgende Weise geschlossen: Um den Mittelpunkt des Kreisbogens n-3 wird ein Kreis mit dem Radius $r$(n-3) - $r$(n-2) geschlagen. Um den Mittelpunkt des Kreisbogens n-1 wird ein Kreis mit dem Radius $r$(n-1) - $r$(n-2) geschlagen. Derjenige der beiden Schnittpunkte dieser Kreise, der zwischen $N_1$ und $K_1$ in ihrer jeweiligen Richtung liegt, ist der Mittelpunkt des Kreises n-2. Die Begrenzung des Kreisbogens n-1 ergibt sich dann durch die Verbindung des Mittelpunktes des Kreisbogens n-1 mit dem Mittelpunkt des Kreisbogens n-2, entsprechend für die Begrenzung des Kreisbogens n-3 und n-2. Die Kreisbögen n-3, n-2 und n-1 werden dann, begrenzt durch ihre Begrenzung, geschlossen.

Das korrespondierende Teilprofil auf der erzeugten Schnecke wird folgendermaßen erzeugt: Alle Mittelpunkte der Kreisbögen M1, M2 bis Mn werden parallel zur Linie zwischen dem Drehpunkt des erzeugenden Profils und dem Drehpunkt des erzeugten Profils um den Achsabstand in Richtung erzeugtes Profil verschoben und ergeben so die korrespondierenden Punkte M1', M2' bis Mn'. Die Begrenzungen, die die Punkte M1 bis Mn schneiden, werden zunächst ebenfalls parallel zur Linie zwischen dem Drehpunkt des erzeugenden Profils und dem Drehpunkt des erzeugten Profils um den Achsabstand in Richtung erzeugtes Profil verschoben. Diese verschobenen Begrenzungen schneiden sich jeweils in den entsprechenden Punkten M1', M2' bis Mn'. Werden sie jeweils entgegen ihrer Richtung durch den jeweiligen Punkt M1', M2' bis Mn' hinaus verlängert und ein entsprechender Radius $r1'$, $r2'$ bis $rn'$ ausgehend von dem jeweiligen Mittelpunkt M1', M2' bis Mn' auf den jeweiligen verlängerten Begrenzungen abgetragen, so dass die Summe der Radien $ri$ und $ri'$ für alle korrespondierenden Kreisbögen i und i' stets gleich dem Achsabstand ist, erhält man die Begrenzungen der Kreisbögen 1', 2' bis n' und somit die entsprechenden Kreisbögen selbst.

Es empfiehlt sich, das Verfahren zur Erzeugung der Schneckenprofile auf einem Computer durchzuführen. Die Abmessungen der Schneckenelemente liegen dann in einer Form vor, in der sie einer CNC-Werkzeugmaschine (CNC = Computerized Numerical Control) zur Erzeugung der Schneckenelemente zugeführt werden können. Gegenstand der vorliegenden Erfindung ist damit auch ein Computerprogrammprodukt, mit Programmcodemitteln zum Ausführen des erfindungsgemäßen Verfahrens zur Erzeugung von erfindungsgemäßen Schneckenprofilen auf einem Computer. In einer bevorzugten Ausführungsform steht einem Benutzer des Computerprogrammprodukts eine bevorzugt grafische Benutzeroberfläche zur Verfügung, mit Hilfe der er die zu wählenden Parameter (Zahl der Kreisbögen des erzeugenden und erzeugten Schneckenprofils, Radien, Winkel) eingeben kann. Bevorzugt erhält er dabei Unterstützung von dem Computersystem, das den Benutzer darauf hinweist, wenn sich durch Wahl der Parameterwerte Schneckenprofile ergeben, die nicht paarweise abschabend sind. Bevorzugt wird er bei der Eingabe der Parameterwerte in der Weise unterstützt, das erlaubte Parameterwertebereiche angezeigt werden. Unter erlaubten Parameterwerten werden solche Kombinationen von Parameterwerten verstanden, die zu paarweise abschabenden Schneckeprofilen führen.

In einer bevorzugten Ausführungsform werden nicht nur die Profile sondern ganze Schneckenelemente virtuell am Computer konstruiert. Das Ergebnis der Konstruktion wird bevorzugt in Form von Konstruktionszeichnungen auf einem Bildschirm oder an einem Drucker ausgegeben. Ebenso ist es denkbar, das Ergebnis als elektronische Datei auszugeben, die in einer bevorzugten Ausführungsform an eine CAD-Fräsmaschine zur Erzeugung der entsprechenden Schneckenelernente weitergegeben werden kann.

Nachdem die Profile auf die beschriebene Weise erzeugt worden sind, können die erfindungsgemäßen Schnek-kenelemente z.B. mit einer Fräsmaschine, einer Drehmaschine oder einer Wirbelmaschine erzeugt werden. Bevorzugte Materialien zur Erzeugung der Schneckenelemente sind Stähle, insbesondere Nitrierstähle, Chrom-, Werkzeug- und Edelstähle, pulvermetallurgisch hergestellte metallische Verbundwerkstoffe auf Basis von Eisen, Nickel oder Kobalt, ingenieurkeramische Werkstoffe wie z.B. Zirkonoxid oder Siliziumcarbid.

Das erfindungsgemäße Verfahren erlaubt es, das Profil einer Schnecke von Grund auf so zu gestalten, dass es für eine vorgegebene Aufgabe optimal geeignet ist. Die nach dem Stand der Technik bekannten Schneckenelemente sind zum größten Teil nicht auf eine konkrete Aufgabe hin optimal gestaltet. Vielmehr liefern die Hersteller Schneckenelemente (Förder-, Knet- und Mischelemente) aus einem festliegenden Baukastensystem unabhängig von einer konkreten Aufgabe. Durch das erfindungsgemäße Verfahren ist es möglich, das Profil von selbstreinigenden Schneckenelementen nahezu völlig frei zu gestalten und somit auf eine Anwendung hin durch kleinste Variation von Parametern für die jeweilige Anwendung zu optimieren. In diesem Zusammenhang sei darauf hingewiesen, dass die Zahl der Kreisbögen zur Erzeugung von Schneckenprofilen nicht limitiert ist. Dadurch ist es möglich, Schneckenprofile, die nicht aus Kreisbögen aufgebaut und damit nicht selbstreinigend sind, durch eine ausreichend hohe Anzahl an Kreisbögen mit einer gewünschten Genauigkeit zu approximieren. Dabei ist das mittels Kreisbögen approximierte Profil natürlich selbstreinigend.

Es sei auch darauf hingewiesen, dass sich aus einem (erzeugenden oder erzeugten) Schneckenprofil das entsprechende Längsschnittprofil berechnen lässt. Bevorzugt wird jeder Kreisbogen eines Schneckenprofils genutzt, um mittels einer expliziten Funktion einen zu diesem Kreisbogen gehörigen Teil des Längsschnitts zu berechnen. Zur Berechnung des Abstandes s eines Punktes eines Kreisbogens eines Schneckenprofils wird in einem ersten Schritt der Schnittpunkt (Sx, Sy) einer Geraden g, dadurch charakterisiert, dass die besagte Gerade in der Ebene des Schneckenprofils liegt, durch den Drehpunkt des Schneckenprofils führt und die Orientierung der Gerade durch den Winkel φ gegeben ist, mit einem Kreisbogen kb, charakterisiert durch seinen Radius r und die Lage seines Mittelpunktes (Mx, My), bestimmt. In einem zweiten Schritt wird der Abstand des Schnittpunktes (Sx, Sy) vom Drehpunkt des Schneckenprofils berechnet. Die Berechnung eines Schnittpunkts einer Geraden mit einem Kreisbogen lässt sich durch eine explizite Funktion darstellen. Gleiches gilt für die Abstandsberechnung. Für den Abstand gilt daher s=s(φ, r, Mx, My). Der Winkel φ lässt sich bei bekannter Steigung t eines Schneckenelements über φ/2π*t in eine axiale Position z_ax umrechnen, so das für den Abstand s=s(z_ax, r, Mx, My)=s(φ/2π*t, r, Mx, My) gilt. Die Funktion s(z_ax, r, Mx, My) beschreibt den gesuchten Längsschnitt für einen Kreisbogen des Schneckenprofils.

Die Erfindung wird nachstehend anhand der Figuren beispielhaft näher erläutert ohne sie jedoch auf diese zu beschränken.

**Figur 1** zeigt schematisch ein Beispiel von zwei korrespondierenden Kreisbögen eines erzeugenden und eines erzeugten Schneckenprofils im Querschnitt. Der Drehmittelpunkt des erzeugenden Schneckenprofils ist DR und der Drehmittelpunkt des erzeugten Schneckenprofils DL. In dieser Figur ist Kreisbogen 1 ein erzeugender und der Kreisbogen 1' ein erzeugter Kreisbogen. Kreisbogen 1 hat einen Mittelpunkt M1, einen Radius $r$1 und einen Winkel $\alpha$1. Kreisbogen 1' hat einen Mittelpunkt M1', einen Radius $r$1' und einen Winkel $\alpha$1', der erfindungsgemäß gleich $\alpha$1 ist. Die Summe der Radien $r$1 und $r$1' ist erfindungsgemäß gleich dem Achsabstand $A$. Die gestrichelt eingezeichneten Verbindungslinien zwischen dem Mittelpunkt M1 des Kreisbogens 1 und seinen Endpunkten bilden die Begrenzungen des Kreisbogens 1. Sie verlaufen jeweils parallel zu den Begrenzungen des korrespondierenden Kreisbogens 1', d.h. parallel zu den gestrichelt eingezeichneten Verbindungslinien zwischen dem Mittelpunkt M1' des Kreisbogens 1' und seinen Endpunkten.

Die Richtungen, in denen die Endpunkte des Kreisbogens 1 vom Mittelpunkt M1 des Kreisbogens 1 aus liegen, sind jeweils entgegengesetzt zu den Richtungen, in denen die Endpunkte des korrespondierenden Kreisbogens 1' vom Mittelpunkt des Kreisbogens 1' aus liegen.

Der Mittelpunkt M1 des Kreisbogens 1 hat einen Abstand zum Mittelpunkt M1' des korrespondierenden Kreisbogens 1', der dem Achsabstand entspricht.

Die Verbindungslinie zwischen dem Mittelpunkt M1 des Kreisbogens 1 und dem Mittelpunkt M1' des korrespondierenden Kreisbogens 1' verläuft parallel zu der Verbindungslinie zwischen dem Drehpunkt DR und dem Drehpunkt DL.

Die Richtung, in die der Mittelpunkt M1 des Kreisbogens 1 verschoben werden müsste, um mit dem Mittelpunkt M1' des korrespondierenden Kreisbogens 1' zur Deckung gebracht zu werden, ist die gleiche, in die der Drehpunkt DR verschoben werden müsste, um mit dem Drehpunkt DL zur Deckung gebracht zu werden.

**Figur 2** zeigt die Profile von zweigängigen, nach dem Stand der Technik bekannten Schneckenelementen im Querschnitt. Der Achsabstand beträgt 48 mm, der Außendurchmesser eines Schneckenprofils 58 mm, der Innendurchmesser entsprechend 38 mm und der Kammwinkel *KW0* im Bogenmaß 0,3788 (entsprechend 21,7°). Die Summe aller Kammwinkel *SKWO* beträgt im Bogenmaß 1,5152.

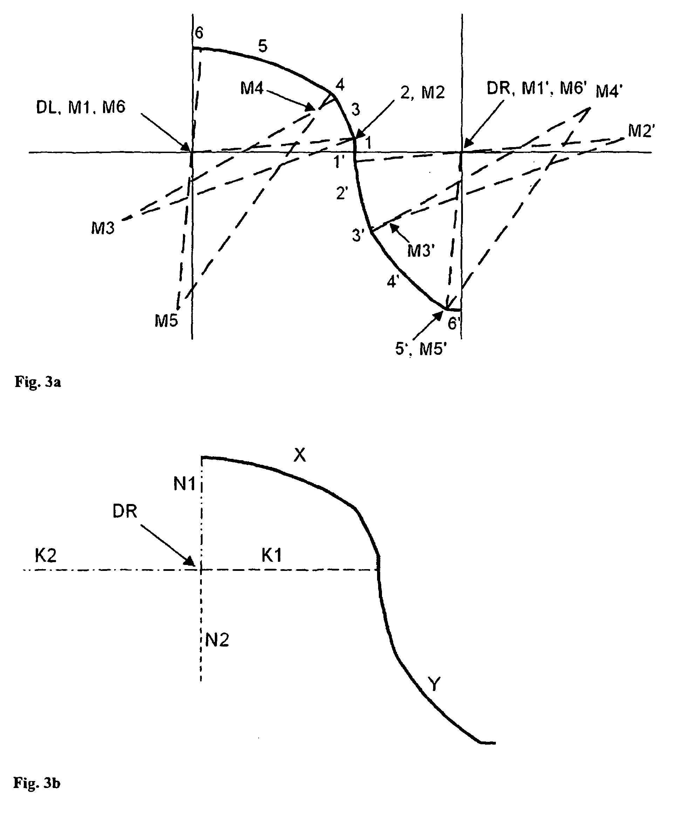

**Figuren 3a** und **3b** zeigen beispielhaft in einer schematischen Darstellung im Querschnitt ein Teilprofil X des erzeugenden und ein dazu korrespondierendes Teilprofil Y des erzeugten Schneckenprofils von erfindungsgemäßen zweigängigen Schneckenelementen. Das Teilprofil X wird durch die Kreisbögen 1, 2, 3, 4, 5 und 6 gebildet. Das Teilprofil Y wird durch die zu den jeweiligen Kreisbögen des Teilprofils X korrespondierenden Kreisbögen 1', 2', 3', 4', 5' und 6' gebildet. Die Kreisbögen sind durch ihre jeweiligen Mittelpunkte M1, M2, ..., M6 und M1', M2', ..., M6', ihre jeweiligen Winkel und Radien eindeutig definiert (siehe Fig. 3a).

Im vorliegenden Beispiel beträgt der Achsabstand 48 mm, der Außendurchmesser eines Schneckenprofils 58 mm und der Innendurchmesser 38 mm. Der Kreisbogen 1 ist der Kammbogen des erzeugenden Teilprofils, Kreisbogen 6 der Nutbogen. Kreisbogen 2 hat einen Radius 0, d.h. am Kammbogen hat das erzeugende Profil einen Knick.

In Figur 3b sind der Übersicht halber die Bezeichnungen der Kreisbögen und Mittelpunkte entfernt worden. Die Teilprofile X und Y sind identisch mit den in Figur 3a gezeigten Teilprofilen.

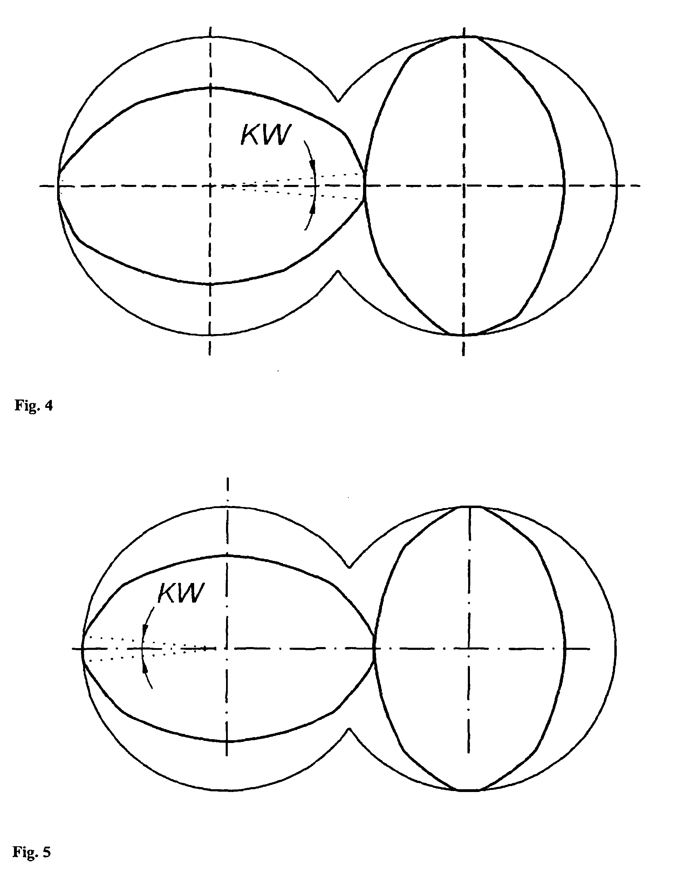

Das Gesamtprofil eines erzeugenden und erzeugten Schneckenelementepaares lässt sich aus dem zwischen den benachbarten Linien K1 und N1 befindlichen Teilprofil X erzeugen (siehe z.B. Fig. 4 und den beschreibenden Text dazu). Die Linie K1 verläuft waagerecht, die Linie N1 senkrecht zu einer Verbindungslinie durch die Drehmittelpunkte.

Die folgende Tabelle 1 zeigt für ein Koordinatensystem, dessen Ursprung im Drehpunkt der erzeugenden Schneckenwelle liegt, dessen x-Achse in Richtung des Drehpunktes der erzeugten Schneckenwelle liegt und dessen y-Achse senkrecht zur x-Achse (in den Figuren nach oben) liegt, die Radien der Kreisbögen, die x-Koordinaten und y-Koordinaten der Mittelpunkte der Kreisbögen, den Anfangswinkel der Kreisbögen, den Endwinkel der Kreisbögen sowie den Winkel der Kreisbögen für die in den Figuren 3a und 3b gezeigten Kreisbögen. Der Anfangswinkel eines Kreisbogens ist derjenige Winkel einer Begrenzung eines Kreisbogens, der im mathematisch positiven Sinn den kleineren Wert hat. Bei Kreisbögen, bei denen der Anfangswinkel größer ist als Null und der Endwinkel kleiner ist als Null, ist bei dieser Betrachtung zu dem Endwinkel 2*$\pi$ zu addieren.

**Tabelle 1:** Geometrische Größen der Teilprofile X und Y erfindungsgemäßer Schneckenelemente, die in Figur 3a und 3b dargestellt sind.

| Kreisbogen | Radius | x-Koordinate Mittelpunkt | y-Koordinate Mittelpunkt | Anfangswinkel | Endwinkel | Winkel |
|---|---|---|---|---|---|---|
| | mm | mm | mm | rad | rad | rad |
| 1 | 29 | 0 | 0 | 0,00000 | 0,08727 | 0,08727 |
| 2 | 0 | 28,8896 | 2,52750 | 0,08727 | 0,34907 | 0,2618 |
| 3 | 44 | -12,4568 | -12,5214 | 0,34907 | 0,53093 | 0,18187 |
| 4 | 3 | 22,8989 | 8,2385 | 0,53093 | 0,97032 | 0,43939 |

EP 2 291 270 B1

(fortgesetzt)

| Kreisbogen | Radius | x-Koordinate Mittelpunkt | y-Koordinate Mittelpunkt | Anfangswinkel | Endwinkel | Winkel |
|---|---|---|---|---|---|---|
| | mm | mm | mm | rad | rad | rad |
| 5 | 48 | -2,5275 | -28,8896 | 0,97032 | 1,48353 | 0,51321 |
| 6 | 19 | 0 | 0 | 1,48353 | 1,5708 | 0,08727 |
| 1' | 19 | 48 | 0 | -3,14159 | -3,05433 | 0,08727 |
| 2' | 48 | 76,8896 | 2,5275 | -3,05433 | -2,79253 | 0,2618 |
| 3' | 4 | 35,5432 | -12,5214 | -2,79253 | -2,61066 | 0,18187 |
| 4' | 45 | 70,8989 | 8,2385 | -2,61066 | -2,17127 | 0,43939 |
| 5' | 0 | 45,4725 | -28,8896 | -2,17127 | -1,65806 | 0,51321 |
| 6' | 29 | 48 | 0 | -1,65806 | -1,5708 | 0,08727 |

**Figur 4** zeigt schematisch im Querschnitt erfindungsgemäße Schneckenelemente mit einem punktsymmetrischen Schneckenprofil, das sich aus den Figuren 3a oder 3b ergibt, wenn die in den Figuren 3a und 3b gezeigten Teilprofile punktsymmetrisch fortgesetzt werden. Alle Kammwinkel sind identisch und gleich 0,17454 (10°). Beispielhaft ist ein Kammwinkel *KW* eingezeichnet. Die Summe aller Kammwinkel *SKW* beträgt 0,698, weniger als die Hälfte des Elementes nach dem Stand der Technik. Das ist ein deutlicher Vorteil gegenüber dem Stand der Technik. Dieses Schneckenprofil hat auch den Vorteil, dass bei Drehrichtung im Uhrzeigersinn die schiebende Flanke einen deutlich größeren Winkel zum Gehäuse bildet als die ziehende Seite, was in Teilfüllung nochmals zu einem deutlich geringerem Energieeintrag führt. Ebenso kann die Drehrichtung umgekehrt werden, was zu erhöhter Dehnung im Kamm führt.

**Figur 5** zeigt schematisch im Querschnitt erfindungsgemäße Schneckenelemente mit einem spiegel- und punktsymmetrischen Schneckenprofil. Im vorliegenden Beispiel beträgt der Achsabstand 48 mm, der Außendurchmesser des Schneckenprofils 58 mm, der Innendurchmesser entsprechend 38 mm und jeder der Kammwinkel 0,175 (10°). Beispielhaft ist ein Kammwinkel KW eingezeichnet. Die Summe aller Kammwinkel *SKW* beträgt 0,69813, weniger als die Hälfte als die Summe der Kammwinkel des Elementes nach dem Stand der Technik. Der Vorteil liegt hierbei in der geringeren Energiedissipation.

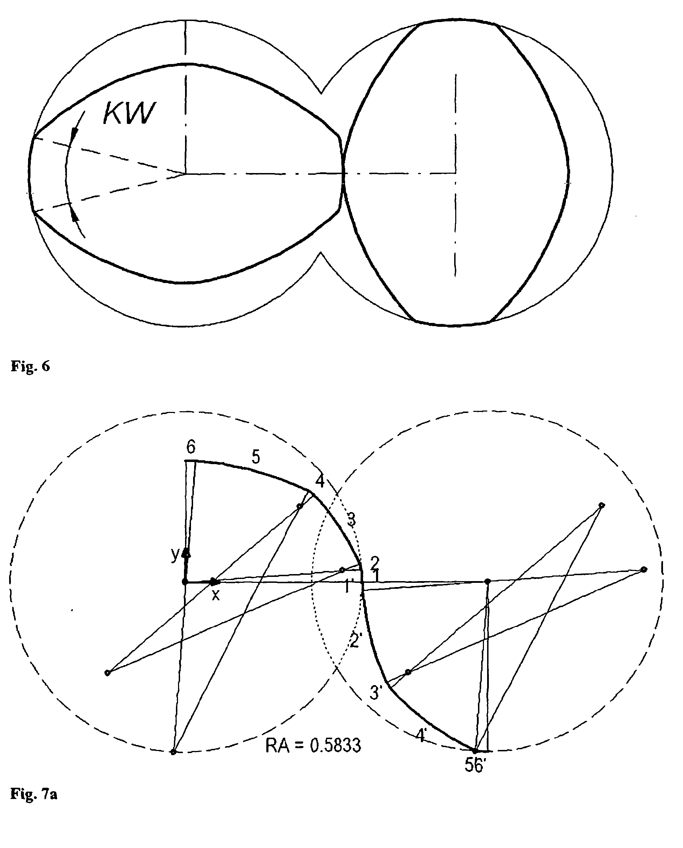

**Figur 6** zeigt schematisch im Querschnitt die Profile zweigängiger, nach dem Stand der Technik bekannter Schneckenelemente. Der Achsabstand beträgt 48 mm, der Außendurchmesser eines Schneckenprofils 56 mm, der Innendurchmesser 40 mm und der Kammwinkel *KW0* 0,4886. Die Summe aller Kammwinkel *SKWO* auf beiden Elementen beträgt 1,954. Vergleicht man dieses Schneckenprofil mit dem der Figur 2, so erkennt man deutlich die nach dem Stand der Technik nachteilhafte Abhängigkeit des Kammwinkels vom Verhältnis aus Achsabstand und Durchmesser nach Gleichung 1.

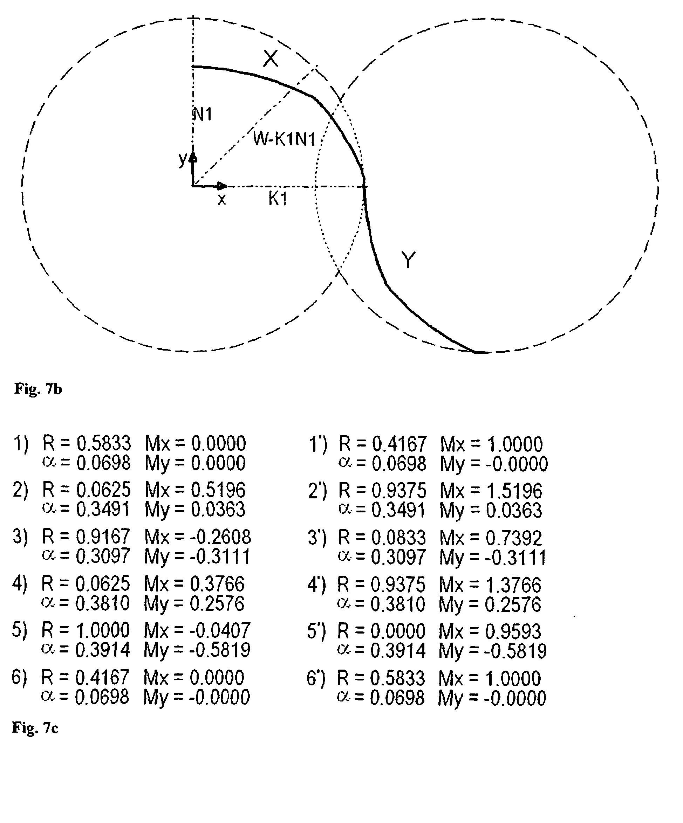

**Figuren 7a** und **7b** zeigen zwei korrespondierende Teilprofile X (erzeugendes Schneckenprofil) und Y (erzeugtes Schneckenprofil) erfindungsgemäßer Schneckenelemente. Das Teilprofil X wird durch die Kreisbögen 1, 2, 3, 4, 5 und 6 gebildet. Das Teilprofil Y wird durch die entsprechenden korrespondierenden Kreisbögen 1', 2', 3', 4', 5' und 6' gebildet. Die Mittelpunkte der Kreisbögen sind durch kleine Kreise dargestellt. Die Begrenzungen der Kreisbögen sind als dünne Linien dargestellt. Im vorliegenden Beispiel beträgt der Achsabstand 48 mm, der Außendurchmesser eines Schneckenprofils 56 mm, der Innendurchmesser 40 mm. Der Kreisbogen 1 ist der Kammbogen und Kreisbogen 6 der Nutbogen des erzeugenden Teilprofils. Der Kreisbogen 2, der an den Kammbogen anschließt, hat einen Radius > 0, d.h. das Profil hat an dieser Stelle im Gegensatz zu dem in den in Figuren 3a und 3b gezeigtem Profil keine Kante.

Der Kreisbogen 5', der an den Kammbogen 6' angrenzt, hat einen Radius 0, d.h. am Kammbogen hat das erzeugte Profil einen Knick. Der Mittelpunkt des Kreisbogens 5' fällt mit dem Knick zusammen. Die "Größe des Knicks" ist durch den entsprechenden Winkel gegeben, d.h. der Übergang vom Kreisbogen 4' auf den Kreisbogen 6' erfolgt durch Drehung um den Winkel des Kreisbogens 5'. Oder anders ausgedrückt: eine Tangente an den Kreisbogen 4' im Mittelpunkt des Kreisbogen 5' schneidet eine Tangente an den Kreisbogen 6' ebenfalls im Mittelpunkt des Kreisbogens 5' in einem Winkel, der dem Winkel des Kreisbogens 5' entspricht. Unter Berücksichtigung des Kreisbogens 5' gehen jedoch alle benachbarten Kreisbögen 4' → 5', 5' → 6' erfindungsgemäß tangential ineinander über.

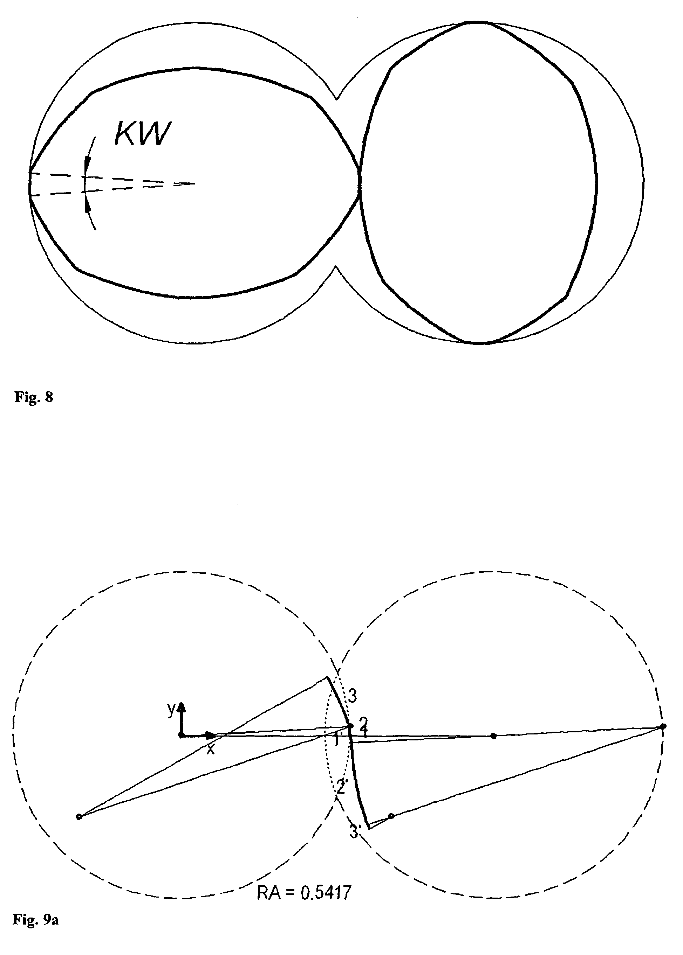

Die in Figur 7b gezeigten Teilprofile X und Y sind mit den in Figur 7a gezeigten Teilprofilen identisch. In Figur 7b wurde der Übersicht halber auf die Bezeichnung der Kreisbögen, die Mittelpunkte und die Begrenzungen verzichtet. Es sind stattdessen die Linien $K_1$ und $N_1$ gezeigt. Die Linie $K_1$ verläuft waagerecht, die Linie $N_1$ senkrecht zu einer Verbindungslinie durch die Drehmittelpunkte. Das Gesamtprofil eines erzeugenden und erzeugten Schneckenelementepaares lässt sich aus dem zwischen den benachbarten Linien K1 und N1 befindlichen Teilprofil X erzeugen (siehe z.B. Fig. 8 und den beschreibenden Text dazu).

Figur 7c zeigt für alle Kreisbögen der Fig. 7a die x- und y-Koordinaten (Mx und My) der Mittelpunkte, die Radien R und die Winkel $\alpha$ der Kreisbögen. Die Winkelangaben erfolgen im Bogenmaß; alle übrigen Maßangaben sind auf den Achsabstand normiert und daher dimensionslos.

Die folgende Tabelle 2 zeigt für ein Koordinatensystem, dessen Ursprung im Drehpunkt der erzeugenden Schneckenwelle liegt, dessen x-Achse in Richtung des Drehpunktes der erzeugten Schneckenwelle liegt und dessen y-Achse senkrecht zur x-Achse (in den Figuren nach oben) liegt, die Radien der Kreisbögen, die x-Koordinaten und y-Koordinaten der Mittelpunkte der Kreisbögen, den Anfangswinkel der Kreisbögen, den Endwinkel der Kreisbögen sowie den Winkel der Kreisbögen für Figuren 7a und 7b.

**Tabelle 2:** Geometrische Größen der Teilprofile X und Y erfindungsgemäßer Schneckenelemente, die in den Figuren 7a und 7b dargestellt sind.

| Kreisbogen | Radius | x-Koordinate Mittelpunkt | y-Koordinate Mittelpunkt | Anfangswinkel | Endwinkel | Winkel |
|---|---|---|---|---|---|---|
|  | mm | mm | mm | rad | rad | rad |
| 1 | 28 | 0 | 0 | 0 | 0,06981 | 0,06981 |
| 2. | 3 | 24,9391 | 1,7439 | 0,06981 | 0,41888 | 0,34907 |
| 3 | 44 | -12,5163 | -14,9323 | 0,41888 | 0,72856 | 0,30968 |
| 4 | 3 | 18,0752 | 12,3654 | 0,72856 | 1,10954 | 0,38098 |
| 5 | 48 | -1,9532 | -27,9318 | 1,10954 | 1,50098 | 0,39144 |
| 6 | 20 | 0 | 0 | 1,50098 | 1,5708 | 0,06981 |
| 1' | 20 | 48 | 0 | -3,14159 | -3,07178 | 0,06981 |
| 2' | 45 | 72,9391 | 1,7439 | -3,07178 | -2,72271 | 0,34907 |
| 3' | 4 | 35,4837 | -14,9323 | -2,72271 | -2,41303 | 0,30968 |
| 4' | 45 | 66,0752 | 12,3654 | -2,41303 | -2,03205 | 0,38098 |
| 5' | 0 | 46,0468 | -27,9318 | -2,03205 | -1,64061 | 0,39144 |
| 6' | 28 | 48 | 0 | -1,64061 | -1,5708 | 0,06981 |

**Figur 8** zeigt schematisch im Querschnitt erfindungsgemäße Schneckenelemente mit einem punktsymmetrischen Schneckenprofil, das sich aus Figur 7 ergibt, wenn es punktsymmetrisch fortgesetzt wird. Im vorliegenden Beispiel betragen alle Kammwinkel 0,14. Ein Kammwinkel *KW* ist beispielhaft eingezeichnet. Die Summe aller Kammwinkel *SKW* beträgt 0,56. Mit einem solchen Schneckenprofil gelingt also hier eine Reduzierung des Kammwinkels um einen Faktor von etwa 3,5, was zu einem deutlich reduzierten Energieeintrag führt. Außerdem ist - bei Rotation gegen den Uhrzeigersinn - die Kante der schiebenden Flanke abgerundet, was Vorteile bei dem Verschleiß bietet.

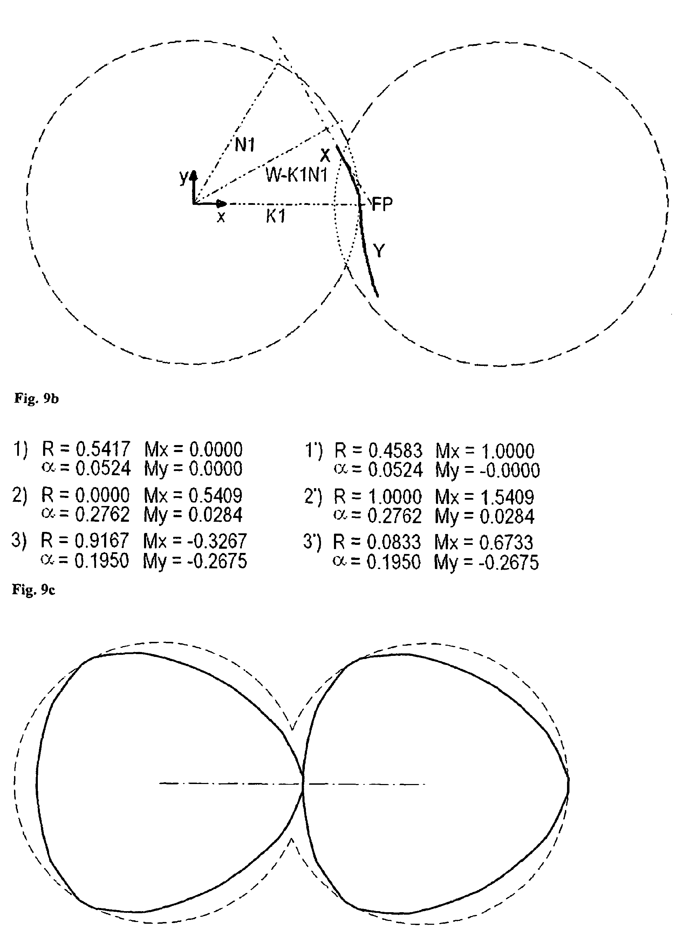

**Figuren 9a** und **9b** zeigen zwei korrespondierende Teilprofile X (erzeugendes Schneckenprofil) und Y (erzeugtes Schneckenprofil) erfindungsgemäßer Schneckenelemente. Das Teilprofil X wird durch die Kreisbögen 1, 2, und 3 gebildet. Das Teilprofil Y wird durch die entsprechenden korrespondierenden Kreisbögen 1', 2' und 3' gebildet. Die Mittelpunkte der Kreisbögen sind durch kleine Kreise dargestellt. Die Begrenzungen der Kreisbögen sind als dünne Linien dargestellt. Im vorliegenden Beispiel beträgt der Achsabstand $A$ = 48 mm, der Durchmesser des Schneckenprofils 52 mm und die Gangzahl $Z$= 3.

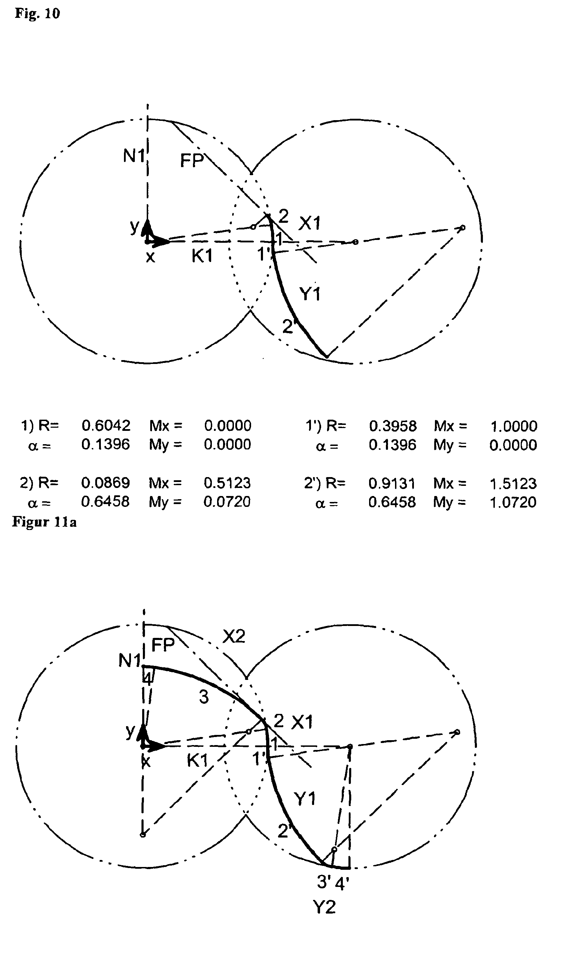

Die in Figur 9b gezeigten Teilprofile X und Y sind mit den in Figur 9a gezeigten Teilprofilen identisch. In Figur 9b wurde der Übersicht halber auf die Bezeichnung der Kreisbögen, die Mittelpunkte und die Begrenzungen verzichtet. Es sind stattdessen die Linien $K_1$ und $N_1$, die Winkelhalbierende $W$-$K_1N_1$ und die senkrecht zur Winkelhalbierenden verlaufende Gerade FP gezeigt. Die Gerade FP berührt den Kreisbogen 3 in einem seiner Endpunkte und verläuft in diesem Endpunkt tangential zum Kreisbogen 3. Ausgehend von dem Teilprofil X lässt sich das Gesamtprofil einer bevorzugten Ausführungsform eines symmetrischen dreigängigen Schneckenelements konstruieren (siehe Fig. 10 und den beschreibenden Text dazu).

**Figur 9c** zeigt für alle Kreisbögen der Fig. 9a die x- und y-Koordinaten (Mx und My) der Mittelpunkte, die Radien R und die Winkel $\alpha$ der Kreisbögen. Die Winkelangaben erfolgen im Bogenmaß; alle übrigen Maßangaben sind auf den Achsabstand normiert und daher dimensionslos.

Die folgende Tabelle 3 zeigt für ein Koordinatensystem, dessen Ursprung im Drehpunkt der erzeugenden Schneckenwelle liegt, dessen x-Achse in Richtung des Drehpunktes der erzeugten Schneckenwelle liegt und dessen y-Achse senkrecht zur x-Achse (in den Figuren nach oben) liegt, die Radien der Kreisbögen, die x-Koordinaten und y-Koordinaten der Mittelpunkte der Kreisbögen, den Anfangswinkel der Kreisbögen, den Endwinkel der Kreisbögen sowie den Winkel der Kreisbögen für Figuren 9a und 9b.

**Tabelle 3:** Geometrische Größen der Teilprofile X und Y erfindungsgemäßer Schneckenelemente, die in den Figuren 9a und 9b dargestellt sind.

| Kreisbogen | Radius | x-Koordinate Mittelpunkt | y-Koordinate Mittelpunkt | Anfangswinkel | Endwinkel | Winkel |
|---|---|---|---|---|---|---|
| | mm | mm | mm | rad | rad | rad |
| 1 | 26 | 0 | 0 | 0 | 0,0524 | 0,0524 |
| 2 | 0 | 25,964 | 1,361 | 0,0524 | 0,3286 | 0,2762 |
| 3 | 44 | -15,681 | -12,839 | 0,3286 | 0,5236 | 0,1950 |
| 1' | 22 | 48 | 0 | -3,1416 | -3,0892 | 0,0524 |
| 2' | 48 | 73,964 | 1,361 | -3,0892 | -2,8130 | 0,2762 |
| 3' | 4 | 32,319 | -12,839 | -2,8130 | -2,6180 | 0,19501 |

**Figur 10** zeigt schematisch im Querschnitt erfindungsgemäße Schneckenelemente mit einem spiegel- und punktsymmetrischen Schneckenprofil, das sich aus den Figuren 9a oder 9b ergibt, wenn es spiegelsymmetrisch fortgesetzt wird. Alle Kammwinkel betragen 0,1048 (6°), gegenüber einem Kammwinkel $KW0$ von 0,2576 bei konventionellen Schneckenelementen.

**Figur 11a** zeigt beispielhaft zwei korrespondierende Teilprofile X1 (erzeugendes Schneckenprofil) und Y1 (erzeugtes Schneckenprofil) erfindungsgemäßer punkt- und spiegelsymmetrischer Schneckenelemente. Das Teilprofil X1 wird durch die Kreisbögen 1 und 2 gebildet. Das Teilprofil Y1 wird durch die entsprechenden korrespondierenden Kreisbögen 1' und 2' gebildet. Die Kreisbögen 2 und 2' tangieren die Gerade FP. Angegeben sind die Winkel im Bogenmaß der Kreisbögen und die Koordinaten der Mittelpunkte der Kreisbögen in einem Koordinatensystem, dessen Ursprung im Drehpunkt des linken Profils ist. Das Verhältnis von Außenradius zu Achsabstand beträgt 0.6042.

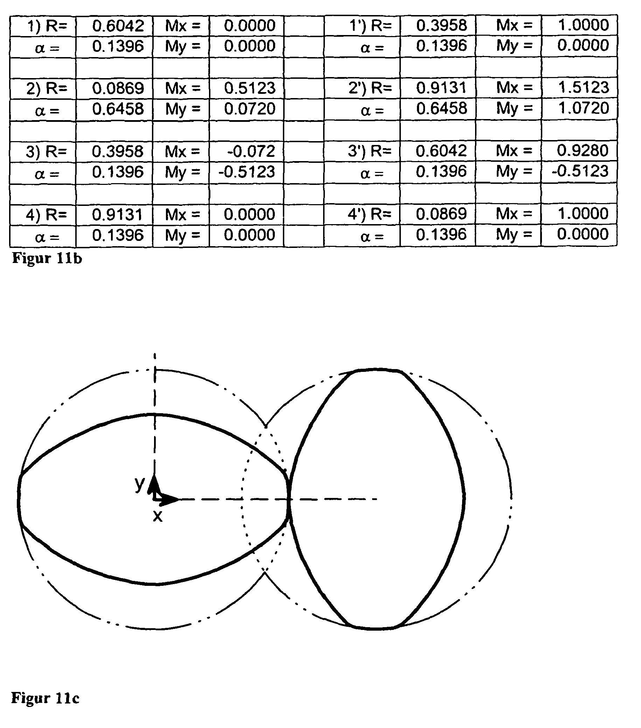

**Figur 11b** zeigt, wie das Profil aus Figur 11a durch Spiegelung an einer Geraden, die senkrecht in der Mitte zwischen den Drehpunkten der beiden Schneckenprofilen steht, und durch anschließende Drehung um den Drehmittelpunkt des erzeugten Profils um $\pi/Z$, fortgesetzt werden kann. Durch diese Fortsetzung werden die Teilprofile X2 und Y2 erhalten. Die Beschreibung der Kreisbögen entspricht der aus Figur 11a.

**Figur 11c** zeigt die Fortsetzung des Profils aus Profil 11b durch Drehung und Spiegelung zu den erzeugenden und erzeugten Gesamtprofilen. Die so erhaltenen Schneckenprofile haben Kammwinkel mit einer Größe von 0,2795. Ein Schneckenelement nach dem Stand der Technik hätte mit diesem Verhältnis von Außenradius zu Achsabstand einen Kammwinkel $KW0$ von 0,379. Die Summe aller Kammwinkel $SKW$ ist entsprechend 1,117, gegenüber einer Summe aller Kammwinkel nach dem Stand der Technik von 1,515. Ein Gesamtprofil in dieser Figur ist jeweils aus insgesamt 12 Kreisbögen zusammengesetzt, der minimalen Anzahl an Kreisbögen für ein Profil mit $Z=2$.

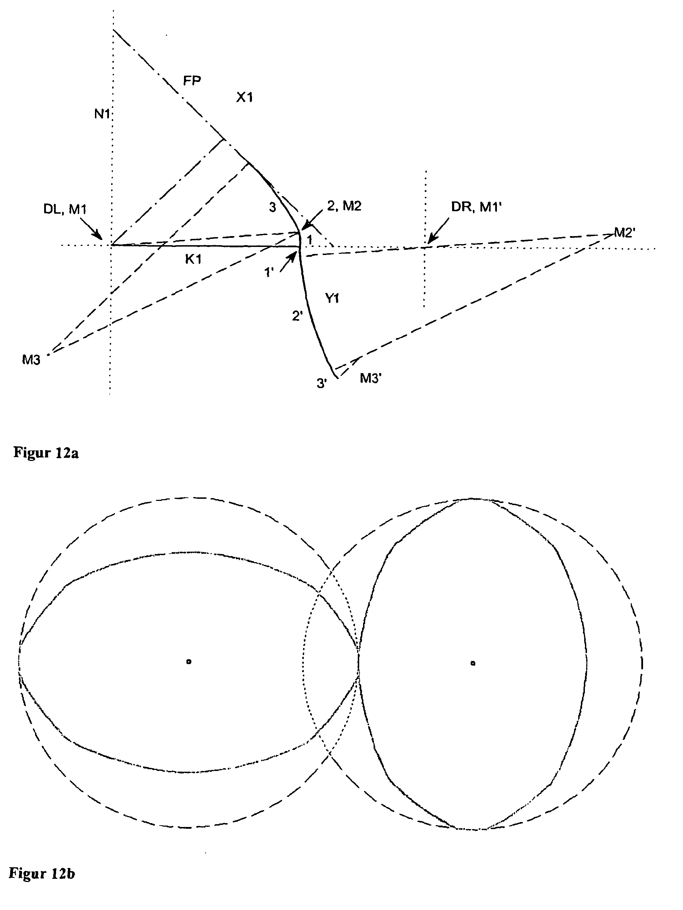

**Figur 12a** zeigt zwei korrespondierende Teilprofile X1 (erzeugendes Schneckenprofil) und Y1 (erzeugtes Schneckenprofil) eines Beispiels erfindungsgemäßer, punkt- und spiegelsymmetrischer Schneckenelemente. Das Teilprofil X1 wird durch die Kreisbögen 1, 2 und 3 gebildet. Das Teilprofil Y1 wird durch die entsprechenden korrespondierenden Kreisbögen 1', 2' und 3' gebildet. Der Abstand der Drehpunkte ist auf 1 normiert. Der Kreisbogen 3 tangiert die Gerade FP. In der Tabelle 4 sind die Radien, Winkel, Anfangspunkte der Kreisbögen und Mittelpunkte der Kreisbögen angegeben.

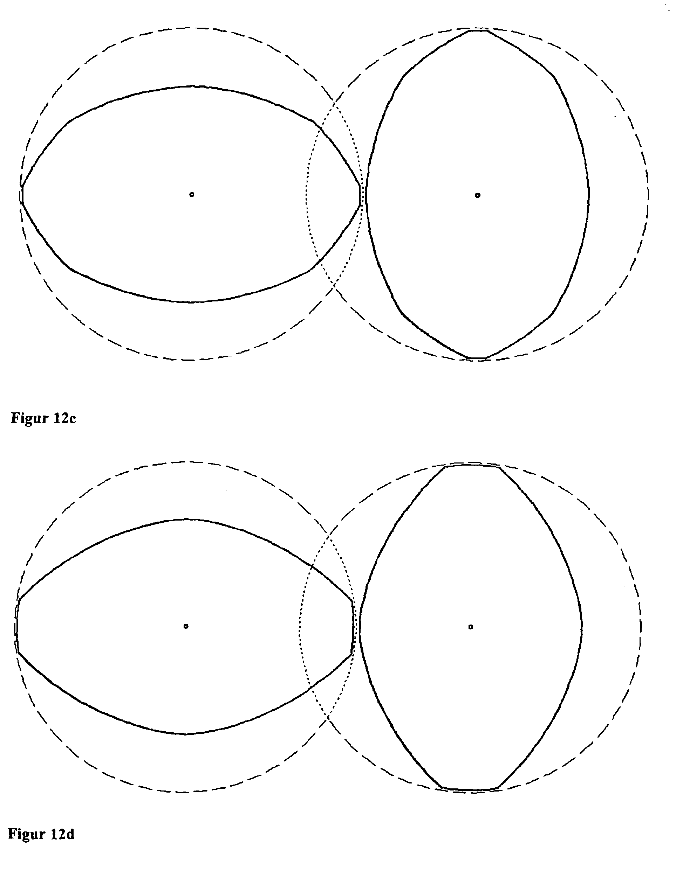

**Tabelle 4:** Geometrische Größen der Teilprofile X und Y erfindungsgemäßer Schneckenelemente, die in den Figuren 12a, 12b und 12c dargestellt sind.

| Radius | Winkel | x-Koordinate Anfangspunkt | y-Koordinate Anfangspunkt | x-Koordinate Mittelpunkt | y-Koordinate Mittelpunkt |
|---|---|---|---|---|---|
| 0.6 | 0.0799 | 0.6 | 0 | 0 | 0 |
| 0 | 0.3943 | 0.5981 | 0.0479 | 0.5981 | 0.0479 |
| 0.9 | 0.3112 | 0.5981 | 0.0479 | -0.2026 | -0.3631 |

**Figur 12b** zeigt das exakt abschabende Profil, das sich aus der Figur 12a durch erfindungsgemäße Spiegelung, Fortsetzung und Drehung ergibt. Der Kammwinkel *KW* der exakt abschabenden Schneckenkontur ist 0,1598. Die Summe aller Kammwinkel *SKW* ist 0,3196. Eine exakt abschabende Kontur nach dem Stand der Technik hat einen Kammwinkel *KW0* von 0,399 und eine Summe aller Kammwinkel *SKWO* von 0,799.

**Figur 12c** zeigt ein Profil, das ausgehend von dem exakt abschabenden Profil in Figur 12b nach der Methode der Raumäquidistante konstruiert wurde. Der Gehäusedurchmesser ist 0,61 und die Spiele zwischen Gehäuse und Schnecke $\delta$ und zwischen Schnecke und Schnecke s sind jeweils 0,02. Die Steigung ist 1,2.

Der ausgeführte Kammwinkel dieses Profils ist *KWA* = 0,208. Die Summe aller ausgeführten Kammwinkel *SKWA* ist 0,319.

**Figur 12d** zeigt ein Profil entsprechend dem Stand der Technik, mit identischen Spielen und identischer Steigung wie in Figur 12c. Das Profil hat einen ausgeführten Kammwinkel *KWA0* von 0,329 und eine Summe der ausgeführten Kammwinkel von 0,658.

**Patentansprüche**

1.  Schneckenelemente für mehrwellige Schneckenmaschinen mit paarweise gleichsinnigen und paarweise exakt abschabenden Schneckenwellen, mit zwei oder mehr Schneckengängen *Z,* mit Achsabstand *A* und Außendurchmesser *DE,* **dadurch gekennzeichnet, dass** die Summe der Kammwinkel eines Elementepaares größer als 0 und kleiner

    ist als $2\pi - 4Z\arccos\left(\dfrac{A}{DE}\right)$ und die Schneckenprofile Spiele im Bereich von 0,001 bis 0,1 bezogen auf DE aufweisen.

2.  Schneckenelemente nach Anspruch 1 **dadurch gekennzeichnet, dass** sich die Profile von erzeugendem und erzeugtem Schnockenprofil jeweils aus 6*Z oder mehr Kreisbögen mit einem Radius größer oder gleich Null und kleiner oder gleich *A* zusammensetzen, wobei die Kreisbögen an ihren Endpunkten tangential ineinander übergehen.

3.  Schneckenelemente nach Anspruch 2 wobei jeweils ein Paar von so genannten korrespondierenden Kreisbögen des erzeugten und erzeugenden Schneckenprofils **dadurch gekennzeichnet ist, dass**

    - die Winkel von korrespondierenden Kreisbögen gleich groß sind,
    - die Summe der Radien korrespondierender Kreisbögen gleich dem Achsabstand ist,
    - je eine der Verbindungslinien zwischen dem Mittelpunkt des Kreisbogens des erzeugenden Schneckenprofils und dessen Endpunkten parallel zu je einer der Verbindungslinien zwischen dem Mittelpunkt des korrespondierenden Kreisbogens des erzeugten Schneckenprofils und dessen Endpunkten verläuft,
    - die Richtungen, in denen die Endpunkte des Kreisbogens des erzeugenden Schneckenprofils vom Mittelpunkt des Kreisbogens aus liegen, jeweils entgegengesetzt sind zu den Richtungen, in denen die Endpunkte des korrespondierenden Kreisbogens des erzeugten Schneckenprofils vom Mittelpunkt des Kreisbogens des erzeugten Schneckenprofils aus liegen,
    - der Mittelpunkt des Kreisbogens des erzeugenden Schneckenprofils einen Abstand zum Mittelpunkt des korrespondierenden Kreisbogens des erzeugten Schneckenprofil hat, der dem Achsabstand entspricht,
    - die Verbindungslinie zwischen dem Mittelpunkt des Kreisbogens des erzeugenden Schneckenprofils und dem Mittelpunkt des korrespondierenden Kreisbogens des erzeugten Schneckenprofile parallel zu der Verbindungslinie zwischen dem Drehpunkt des erzeugenden Schneckenprofils und dem Drehpunkt des erzeugten Schneckenprofils ist,
    - die Richtung, in die der Mittelpunkt des Kreisbogens des erzeugenden Schneckenprofils verschoben werden müsste, um mit dem Mittelpunkt des korrespondierenden Kreisbogens des erzeugten Schneckenprofils zur Deckung gebracht zu werden, die gleiche ist, in die der Drehpunkt des erzeugenden Schneckenprofils verschoben werden müsste, um mit dem Drehpunkt des erzeugten Schneckenprofils zur Deckung gebracht zu werden.

4.  Schneckenelemente nach einem der Ansprüche 1 bis 3, **dadurch gekennzeichnet, dass** an mindestens einem Kammbogen eines Profils ein Kreisbogen mit Radius 0 anschließt.

5.  Schneckenelemente nach einem der Ansprüche 1 bis 4, **dadurch gekennzeichnet, dass** an mindestens einem Kammbogen eines Profils ein Kreisbogen mit Radius > 0 und kleiner als 0,1 mal dem Schneckendurchmesser anschließt.

6. Schneckenelemente nach einem der Ansprüche 1 bis 5, **dadurch gekennzeichnet, dass** sich Kammbögen und Nutbögen beim Umlauf um ein Profil abwechseln.

7. Schneckenelemente nach einem der Ansprüche 1 bis 6, **dadurch gekennzeichnet, dass** die Schneckenelemente eine Anzahl von Symmetrieachsen haben, die denen der Gangzahl entspricht.

8. Schneckenelemente nach einem der Ansprüche 1 bis 7, **dadurch gekennzeichnet, dass** die Schneckenelemente eine Punktsymmetrie, aber keine Spiegelsymmetrie haben.

9. Schneckenelemente nach einem der Ansprüche 1 bis 8, ausgeführt als Förderelemente.

10. Schneckenelemente nach einem der Ansprüche 1 bis 8, ausgeführt als Knetelemente.

11. Schneckenelemente nach einem der Ansprüche 1 bis 8, ausgeführt als Mischelemente.

12. Schneckenelemente, die von Schneckenelementen gemäß einem der Ansprüche 1 bis 11 abgeleitet sind, **dadurch gekennzeichnet, dass** die Schneckenelemente Spiele zwischen Schneckenelementen und Gehäuse und/oder zwischen benachbarten Schneckenelementen aufweisen.

13. Verwendung der Schneckenelemente nach einem der Ansprüche 1 bis 12 in einer Mehrwellenschneckenmaschine.

14. Verfahren zur Erzeugung von Schneckenelementen nach einem der Ansprüche 1 bis 11 für mehrwellige Schneckenmaschinen mit paarweise gleichsinnigen und paarweise exakt abschabenden Schneckenwellen, **dadurch gekennzeichnet, dass** zur Ausbildung der erzeugenden und erzeugten Schneckenprofile jeweils 6*Z oder mehr Kreisbögen mit einem Radius größer oder gleich Null und kleiner oder gleich $A$ zusammengesetzt werden, wobei die Kreisbögen an ihren Endpunkten tangential ineinander übergehen und die Summe der Kammwinkel des Elementepaares kleiner ist als $2\pi - 4\,Z\arccos\left(\dfrac{A}{DE}\right)$.

## Claims

1. Screw elements for multi-shaft screw machines with paired co-directional and paired fully wiping screw shafts, with two or more screw flights Z, with a centreline distance A and an outside diameter DE, **characterized in that** the sum of the flight land angles of a pair of elements is greater than 0 and less than $2\pi - 4\,Z\arccos\left(\dfrac{A}{DE}\right)$ and the screw profiles have clearance in the range from 0.001 to 0.1 based on DE.

2. Screw elements according to Claim 1, **characterized in that** the profiles of generating and generated screw profiles are made up in each case of *6*Z or more arcs with a radius greater than or equal to 0 and less than or equal to A, the arcs merging tangentially with one another at the end points thereof.

3. Screw elements according to Claim 2, a pair of so-called corresponding arcs of the generated and generating screw profiles respectively being **characterized in that**

- the angles of corresponding arcs are of the same size,
- the sum of the radii of corresponding arcs is equal to be centreline distance,
- one of the joining lines between the centre point of an arc of the generating screw profile and the end points thereof in each case runs parallel to one of the joining lines between the centre point of the corresponding arc of the generated screw profile and the end points thereof,
- the directions in which the end points of the arc of the generating screw profile lie from the centre point of the arc are respectively opposite the directions in which the end points of the corresponding arc of the generated screw profile lie from the centre point of the arc of the generated screw profile,
- the centre point of an arc of the generating screw profile is at a distance from the centre point of a corresponding arc of the generated screw profile that corresponds to the centreline distance,

- the joining line between the centre point of an arc of the generating screw profile and the centre point of the corresponding arc of the generated screw profile is parallel to the joining line between the point of rotation of the generating screw profile and the point of rotation of the generated screw profile,

- the direction in which the centre point of an arc of the generating screw profile would have to be displaced to make it coincide with the centre point of the corresponding arc of the generated screw profile is the same as the direction in which the point of rotation of the generating screw profile would have to be displaced to make it coincide with the point of rotation of the generated screw profile.

4. Screw elements according to one of Claims 1 to 3, **characterized in that** at least one flight land arc of the profile is adjoined by an arc with a radius of 0.

5. Screw elements according to one of Claims 1 to 4, **characterized in that** at least one flight land arc of the profile is adjoined by an arc with a radius > 0 and less than 0.1 of the screw diameter.

6. Screw elements according to one of Claims 1 to 5, **characterized in that** flight land arcs and groove arcs alternate around a profile.

7. Screw elements according to one of Claims 1 to 6, **characterized in that** the screw elements have a number of axes of symmetry that corresponds to the number of flights.

8. Screw elements according to one of Claims 1 to 7, **characterized in that** the screw elements have a point symmetry, but no mirror symmetry.

9. Screw elements according to one of Claims 1 to 8, formed as conveying elements.

10. Screw elements according to one of Claims 1 to 8, formed as kneading elements.

11. Screw elements according to one of Claims 1 to 8, formed as mixing elements.

12. Screw elements which are derived from screw elements according to one of Claims 1 to 11, **characterized in that** the screw elements have clearances between the screw elements and the barrel and/or between adjacent screw elements.

13. Use of the screw elements according to one of Claims 1 to 12 in a multi-shaft screw machine.

14. Method for producing screw elements according to one of Claims 1 to 11 for multi-shaft screw machines with paired co-directional and paired fully wiping screw shafts, **characterized in that**, to form the generating and generated screw profiles, in each case 6*Z or more arcs with a radius greater than or equal to 0 and less than or equal to A are put together, the arcs merging tangentially with one another at the end points thereof and the sum of the flight land angles of the pair of elements being less than $2\pi - 4Z\arccos\left(\dfrac{A}{DE}\right)$.

**Revendications**

1. Eléments hélicoïdaux pour machines à plusieurs arbres hélicoïdaux qui présentent des arbres hélicoïdaux tournant deux à deux dans le même sens, se touchant exactement deux à deux et présentant deux ou plusieurs pas hélicoïdaux Z, une distance A entre les axes et un diamètre extérieur DE,
**caractérisés en ce que**
la somme des angles d'engrenage d'une paire d'éléments est supérieure à 0 et inférieure à $2\pi$ - 4Z arccos(A/DE) et **en ce que** les profils hélicoïdaux présentent par rapport à DE un jeu compris dans la plage de 0,001 à 0,1.

2. Eléments hélicoïdaux selon la revendication 1, **caractérisés en ce que** les profils du profil hélicoïdal formant et du profil hélicoïdal formé sont constitués chacun de 6 * Z arcs de cercle ou plus dont le rayon est supérieur ou égal à 0 et inférieur ou égal à A, les arcs de cercle se prolongeant tangentiellement l'un dans l'autre en leurs points d'extrémité.

3. Eléments hélicoïdaux selon la revendication 2, dans lesquels une paire de deux arcs de cercle dits correspondants du profil hélicoïdal formé et du profil hélicoïdal formant est **caractérisée en ce que**
les angles des arcs de cercle correspondants sont de même valeur,
**en ce que** la somme des rayons d'arcs de cercle correspondants est égale à l'écart entre les axes,
**en ce qu'**une des lignes de liaison entre le centre de l'arc de cercle du profil hélicoïdal formant et ses points d'extrémité s'étend en parallèle à l'une des lignes de liaison entre le centre de l'arc de cercle correspondant du profil hélicoïdal formé et de ses points d'extrémité,
**en ce que** les directions dans lesquelles les points d'extrémité de l'arc de cercle du profil hélicoïdal formant sont situés par rapport au centre de l'arc de cercle sont toutes opposées aux directions dans lesquelles les points d'extrémité de l'arc de cercle correspondant du profil hélicoïdal formé sont situés par rapport au centre de l'arc de cercle du profil hélicoïdal formé,
**en ce que** le centre de l'arc de cercle du profil hélicoïdal formant présente par rapport au centre de l'arc de cercle correspondant du profil hélicoïdal formé une distance qui correspond à la distance entre les axes,
la ligne de liaison entre le centre de l'arc de cercle du profil hélicoïdal formant et le centre de l'arc de cercle correspondant du profil hélicoïdal formé étant parallèle à la ligne de liaison entre le centre de rotation du profil hélicoïdal formant et du centre de rotation du profil hélicoïdal formé et
**en ce que** la direction dans laquelle le centre de l'arc de cercle du profil hélicoïdal formant devrait être déplacé pour être amené à couvrir le centre de l'arc de cercle correspondant du profil hélicoïdal formé est celle dans laquelle le centre de rotation du profil hélicoïdal formant devrait être déplacé pour être amené à recouvrir le centre de rotation du profil hélicoïdal formé.

4. Eléments hélicoïdaux selon l'une des revendications 1 à 3, **caractérisés en ce qu'**un arc de cercle de rayon 0 se raccorde à au moins un arc d'engrenage d'un profil.

5. Eléments hélicoïdaux selon l'une des revendications 1 à 4, **caractérisés en ce qu'**un arc de cercle de rayon > 0 et inférieur à 0,1 fois le diamètre de la vis se raccorde à l'arc ou aux arcs d'engrenage d'un profil.

6. Eléments hélicoïdaux selon l'une des revendications 1 à 5, **caractérisés en ce que** les arcs d'engrenage et les arcs de rainure s'alternent autour d'un profil.

7. Eléments hélicoïdaux selon l'une des revendications 1 à 6, **caractérisés en ce que** les éléments hélicoïdaux ont un nombre d'axes de symétrie qui correspond à celui du nombre de pas.

8. Eléments hélicoïdaux selon l'une des revendications 1 à 7, **caractérisés en ce que** les éléments hélicoïdaux ont une symétrie centrale mais pas de symétrie spéculaire.

9. Eléments hélicoïdaux selon l'une des revendications 1 à 8, configurés comme éléments de transport.

10. Eléments hélicoïdaux selon l'une des revendications 1 à 8, configurés comme éléments de pétrissage.

11. Eléments hélicoïdaux selon l'une des revendications 1 à 8, configurés comme éléments de mélange.

12. Eléments hélicoïdaux dérivés d'éléments hélicoïdaux selon l'une des revendications 1 à 11 et **caractérisés en ce que** les éléments hélicoïdaux présentent un jeu entre les éléments hélicoïdaux et le boîtier et/ou entre des éléments hélicoïdaux voisins.

13. Utilisation des éléments hélicoïdaux selon l'une des revendications 1 à 12 dans une machine à plusieurs arbres hélicoïdaux.

14. Procédé de formation d'éléments hélicoïdaux selon l'une des revendications 1 à 11 pour machines à plusieurs arbres hélicoïdaux qui présentent des arbres hélicoïdaux tournant deux à deux dans le même sens et se touchant exactement deux à deux,
**caractérisé en ce que**
pour former les profils hélicoïdaux formants et les profils hélicoïdaux formés, 6 * Z arcs de cercle ou plus dont le rayon est supérieur ou égal à 0 et inférieur ou égal à A sont assemblés,
les arcs de cercle se prolongeant tangentiellement l'un dans l'autre en leurs points d'extrémité et
la somme des angles d'engrenage d'une paire d'éléments est inférieure à $2\pi - 4Z \arccos(A/DE)$.

**Figuren**

Fig. 1

Fig. 2

**Fig. 3a**

**Fig. 3b**

Fig. 4

Fig. 5

Fig. 6

RA = 0.5833

Fig. 7a

**Fig. 7b**

1) R = 0.5833   Mx = 0.0000
   α = 0.0698   My = 0.0000

2) R = 0.0625   Mx = 0.5196
   α = 0.3491   My = 0.0363

3) R = 0.9167   Mx = -0.2608
   α = 0.3097   My = -0.3111

4) R = 0.0625   Mx = 0.3766
   α = 0.3810   My = 0.2576

5) R = 1.0000   Mx = -0.0407
   α = 0.3914   My = -0.5819

6) R = 0.4167   Mx = 0.0000
   α = 0.0698   My = -0.0000

1') R = 0.4167   Mx = 1.0000
    α = 0.0698   My = -0.0000

2') R = 0.9375   Mx = 1.5196
    α = 0.3491   My = 0.0363

3') R = 0.0833   Mx = 0.7392
    α = 0.3097   My = -0.3111

4') R = 0.9375   Mx = 1.3766
    α = 0.3810   My = 0.2576

5') R = 0.0000   Mx = 0.9593
    α = 0.3914   My = -0.5819

6') R = 0.5833   Mx = 1.0000
    α = 0.0698   My = -0.0000

**Fig. 7c**

**Fig. 8**

RA = 0.5417

**Fig. 9a**

**Fig. 9b**

| | | | |
|---|---|---|---|
| 1) | R = 0.5417 | Mx = 0.0000 | 1') R = 0.4583 Mx = 1.0000 |
| | α = 0.0524 | My = 0.0000 | α = 0.0524 My = -0.0000 |
| 2) | R = 0.0000 | Mx = 0.5409 | 2') R = 1.0000 Mx = 1.5409 |
| | α = 0.2762 | My = 0.0284 | α = 0.2762 My = 0.0284 |
| 3) | R = 0.9167 | Mx = -0.3267 | 3') R = 0.0833 Mx = 0.6733 |
| | α = 0.1950 | My = -0.2675 | α = 0.1950 My = -0.2675 |

**Fig. 9c**

Fig. 10

| | | | | | | | |
|---|---|---|---|---|---|---|---|
| 1) R= | 0.6042 | Mx = | 0.0000 | 1') R= | 0.3958 | Mx = | 1.0000 |
| α = | 0.1396 | My = | 0.0000 | α = | 0.1396 | My = | 0.0000 |
| 2) R= | 0.0869 | Mx = | 0.5123 | 2') R= | 0.9131 | Mx = | 1.5123 |
| α = | 0.6458 | My = | 0.0720 | α = | 0.6458 | My = | 1.0720 |

**Figur 11a**

| 1) R= | 0.6042 | Mx = | 0.0000 | | 1') R= | 0.3958 | Mx = | 1.0000 |
|---|---|---|---|---|---|---|---|---|
| $\alpha =$ | 0.1396 | My = | 0.0000 | | $\alpha =$ | 0.1396 | My = | 0.0000 |
| | | | | | | | | |
| 2) R= | 0.0869 | Mx = | 0.5123 | | 2') R= | 0.9131 | Mx = | 1.5123 |
| $\alpha =$ | 0.6458 | My = | 0.0720 | | $\alpha =$ | 0.6458 | My = | 1.0720 |
| | | | | | | | | |
| 3) R= | 0.3958 | Mx = | -0.072 | | 3') R= | 0.6042 | Mx = | 0.9280 |
| $\alpha =$ | 0.1396 | My = | -0.5123 | | $\alpha =$ | 0.1396 | My = | -0.5123 |
| | | | | | | | | |
| 4) R= | 0.9131 | Mx = | 0.0000 | | 4') R= | 0.0869 | Mx = | 1.0000 |
| $\alpha =$ | 0.1396 | My = | 0.0000 | | $\alpha =$ | 0.1396 | My = | 0.0000 |

**Figur 11b**

**Figur 11c**

**Figur 12a**

**Figur 12b**

Figur 12c

Figur 12d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 862668

- EP O160124 A

**In der Beschreibung aufgeführte Nicht-Patentliteratur**

- Doppelschneckenextruder. Hanser Verlag, 2007, 96 ff